# EUROPEAN PATENT SPECIFICATION

(11) **EP 0 643 852 B1**
(45) Date of publication and mention of the grant of the patent: **16.10.1996**
(21) Application number: 93915153.6
(22) Date of filing: 28.05.1993
(51) Int. Cl.: G06F 12/02

(54) **ADAPTIVE MEMORY CONTROLLER**
ADAPTIVE SPEICHERSTEUREINRICHTUNG.
CONTROLEUR DE MEMOIRE ADAPTATIF

(30) Priority: 04.06.1992 US 893467
(43) Date of publication of application: 22.03.1995
(73) Proprietor: CABLETRON SYSTEMS, INC., Rochester, NH 03867 (US)
(72) Inventor: PARKER, Thomas, B., Merrimack, NH 03054 (US)
(74) Representative: Morgan, James G.
(86) International application number: US9305102
(87) International publication number: WO9324885

(56) References cited:
- EP-A- 0 226 950
- EP-A- 0 488 566
- US-A- 5 034 917
- US-A- 5 159 676
- IBM Technical Disclosure Bulletin, vol. 34, no. 10B, March 1992, "SAMEROW OF ACCESSING DYNAMIC RAMS"

## Description

### Field of the Invention

This invention relates to methods and apparatus for controlling computer memories which have multiplexed addresses and, more particularly, to methods and apparatus for automatically selecting a mode of operation which provides the highest operating speed for the addresses being presented to the memory.

### Background of the Invention

Semiconductor memory devices can be classified as having a multiplexed address or a non-multiplexed address. In non-multiplexed address memories, the entire address is presented at one time, and the data transfer begins when the address has stabilized. In multiplexed address memories, a first portion of the address is presented to the memory and is strobed into the memory. Then, a second address portion is presented. When the second address portion is presented, the data transfer can take place. An example of a multiplexed address memory is a dynamic random access memory (DRAM). The industry currently offers three types of DRAM's. They are: "page mode", "nibble mode" and "static column mode" memories. In the case of a DRAM, the first address portion is a row address, and the second address portion is a column address. When a row address strobe (RAS) is asserted, the DRAM stores the row address internally. The column address is then presented to the memory and may be strobed in page mode or nibble mode DRAM's. Data transfer begins at the strobing of the column address. In the case of static column DRAM's, a column address strobe (CAS) is interpreted as a chip select rather than a strobe. This configuration allows the DRAM to temporarily function as a static random access memory as long as the row address remains constant. Each data transfer begins at the instant the new column address stabilizes. The DRAM accesses each new location defined by the column address in real time. Multiplexed address memories are typically smaller, have more storage capacity per unit area, consume less power, run cooler and cost less than equivalent non-multiplexed address memories.

A disadvantage of multiplexed address memories is that time is consumed by serially strobing the first address portion and the second address portion into the memory in a two-step process. Thus, multiplexed address memories are typically slower and more complex than non-multiplexed address memories.

One known technique for increasing the operating speed of multiplexed address memories is to operate in a page mode during memory access. In the page mode, a selected row address is strobed into the memory. Then, several locations having the same row address but different column addresses are sequentially accessed. In the page mode, the two-step address process is required only for the first memory location, and the following locations with the same row address are each accessed in a single step.

The page mode operates efficiently when the software frequently accesses multiple locations having the same row address. However, when the row address changes, the row address strobe (RAS) must be deasserted and then reasserted, thereby causing a time penalty. When the row address changes frequently in the page mode, a reduction in operating speed occurs.

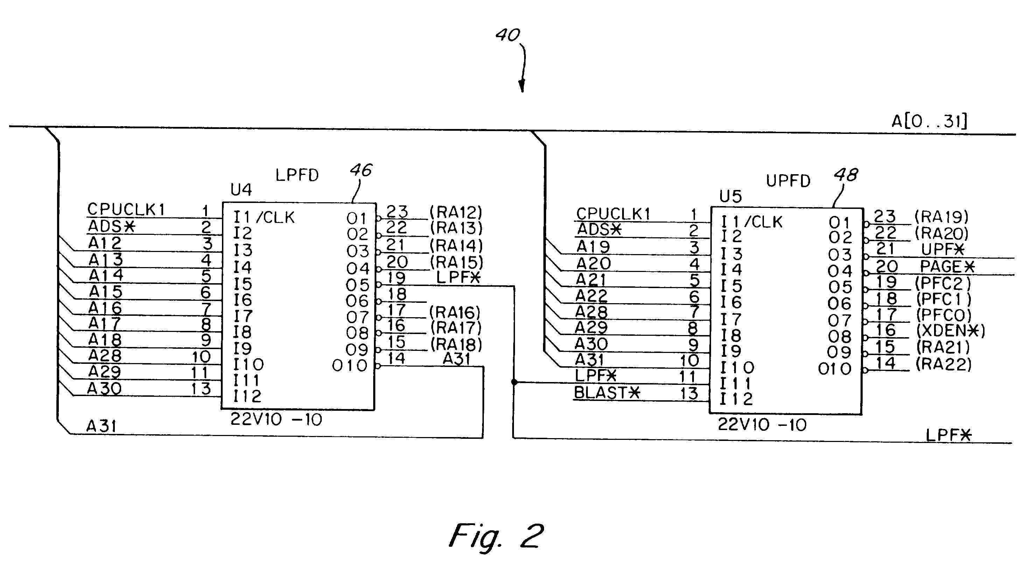

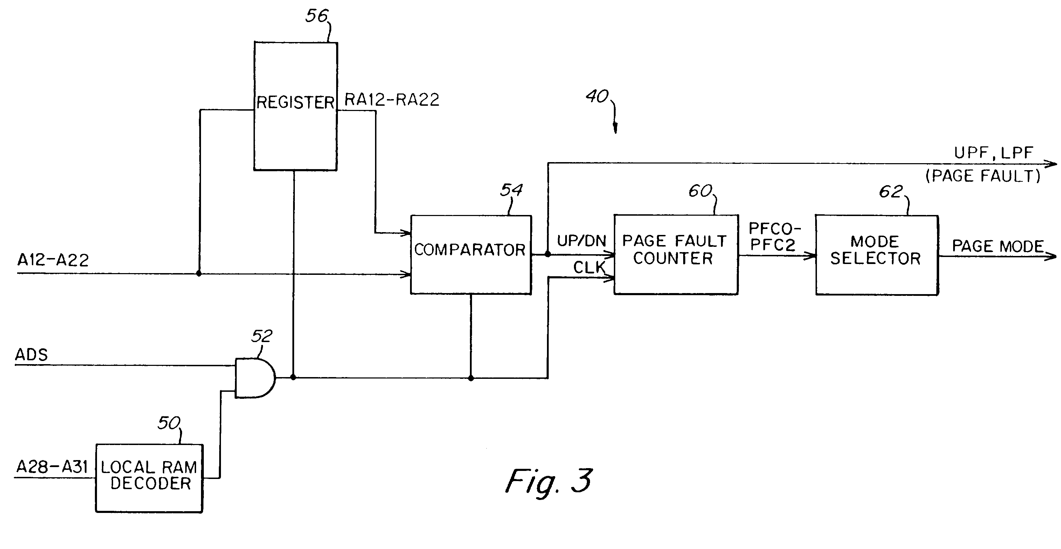

Another technique for increasing performance while using DRAM devices is described in IBM Technical Disclosure Bulletin, Vol. 34, No. 10B, March 1992, "Samerow Method Of Accessing Dynamic RAMS." This method is based on the observation that there is a high probability of successive memory accesses to the same row. In one hardware implementation shown in Fig. 2, a resettable static RAM (SRAM) is used to detect if the row address of the current access and previous access are the same. In an alternative hardware embodiment shown in Fig. 3, the previous row address is stored in a latch. However, the improvement in performance is limited based on the simplified assumption that the next access will be for the same row. Also, the system is not adaptive.

It is a general object of the present invention to provide improved methods and apparatus for controlling multiplexed address memories.

It is another object of the present invention to provide methods and apparatus for controlling multiplexed address memories wherein the operating mode is automatically selected to provide the highest operating speed.

It is a further object of the present invention to provide methods and apparatus for high speed operation of multiplexed address memories.

It is yet another object of the present invention to provide an adaptive memory controller for automatically selecting page mode or non-page mode, depending on a differential between page faults and non-page faults.

According to the present invention, these and other objects and advantages are achieved in methods and apparatus for controlling a random access memory having multiplexed address lines as defined in the claims.

### Brief Description of the Drawings

For a better understanding of the present invention, together with other and further objects, advantages and capabilities thereof, reference is made to the accompanying drawings, which are incorporated herein by reference and in which:
FIG. 1 is a block diagram of a computer that incorporates an adaptive memory controller in accordance with the present invention;
FIG. 2 is a schematic diagram of a preferred embodiment of the page fault detector shown in FIG. 1;
FIG. 3 is a functional block diagram of the page fault detector shown in FIGS. 1 and 2;
FIG. 4 is a flow diagram that illustrates the functions performed by the page fault detector;
FIG. 5 is a schematic diagram of a preferred embodiment of the memory controller shown in FIG. 1;
FIG. 6a is a timing diagram that illustrates waveforms associated with the memory controller of FIG. 5 for page mode operation;
FIG. 6b is a timing diagram that illustrates waveforms associated with the memory controller of FIG. 5 for non-page mode operation;
FIG. 7 is a timing diagram that illustrates burst write control timing;
FIG. 8 is a schematic diagram of a preferred embodiment of the address multiplexer shown in FIG. 1;
FIG. 9 is a functional block diagram of part of the address multiplexer of FIG. 8; and
FIG. 10 is a timing diagram that illustrates operation of the address multiplexer.

### Detailed Description of the Invention

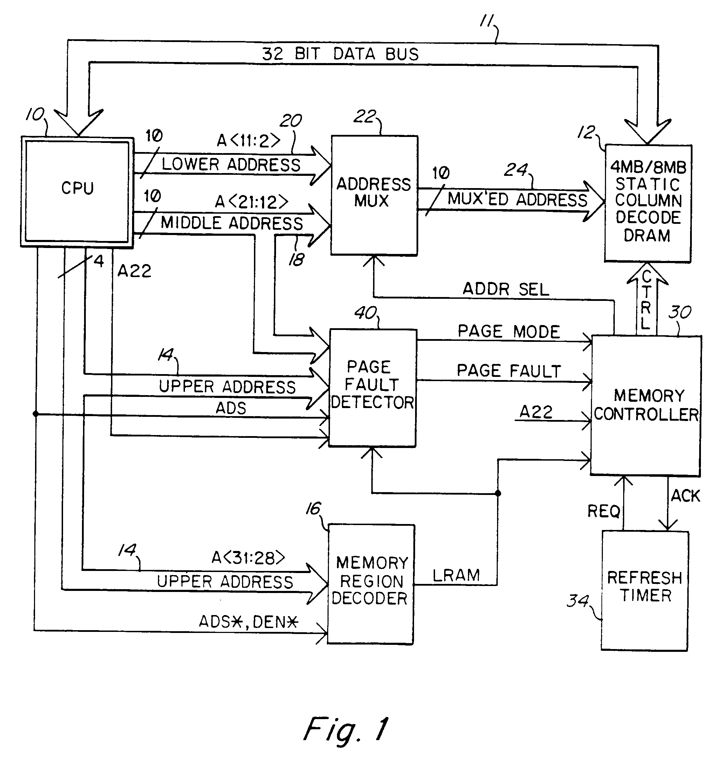

A block diagram of a computer that incorporates an adaptive memory controller in accordance with the present invention is shown in FIG. 1. A CPU 10 provides address and control signals for accessing a dynamic random access memory (DRAM) 12. A data bus 11 interconnects memory 12 and CPU 10. In the present example, the CPU 10 provides a 32 bit address. Upper address bits on lines 14 are supplied to a memory region decoder 16. The CPU 10 also supplies an address strobe (ADS) signal and a data enable (DEN) signal to the memory region decoder 16. The memory region decoder 16 outputs a local memory (LRAM) signal which indicates that the memory 12 is being accessed by CPU 10.

The CPU 10 provides middle address bits on lines 18 and lower address bits on lines 20 to an address multiplexer 22. The memory 12 is of a type which has multiplexed address lines 24. A first address portion is strobed into memory 12 on address lines 24 in a first step. The first address portion is stored internally in memory 12. Then, a second address portion is applied to memory 12 on address lines 24. In the present example, the memory 12 comprises two banks of one megabit by 4 static column decode DRAM devices, such as type HM514402AZ-6. The first address portion constitutes a row address, and the second address portion constitutes a column address. The address multiplexer 22 converts the middle address bits on lines 18 and the lower address bits on lines 20, provided in parallel by CPU 10, to a multiplexed address on lines 24. The multiplexed address includes a row address followed by a column address. Page and non-page modes of applying the multiplexed address to memory 12 are discussed in detail below.

Control signals are supplied to the address multiplexer 22 and the memory 12 by a memory controller 30. The memory controller 30 supplies an address select signal to address multiplexer 22. Control signals, including row address strobe (RAS), column address strobe (CAS), output enable and write enable signals, are supplied to memory 12. A refresh timer 34 supplies signals to memory controller 30 for periodic refresh of memory 12.

The middle address bits on lines 18, which represent the row address for memory 12, are supplied to a page fault detector 40. The upper address bits on lines 14 and the address strobe ADS are also supplied to page fault detector 40. The page fault detector 40 compares row addresses on successive memory transfers.

In the present example, the CPU 10 performs burst transfers of one to four memory locations with the same row address. In this case, the row addresses for successive burst transfers are compared. In general, the CPU 10 may not utilize burst transfers. When burst transfers are not utilized, the row addresses on successive memory access cycles are compared. Thus, row addresses are compared on successive burst or non-burst memory transfers.

A page fault is defined as a change in row addresses on successive memory transfers to memory 12. No page fault occurs when the row addresses on successive memory transfers remain the same. Each memory transfer is classified by the page fault detector 40 as either a page fault or a non-page fault. The page fault detector 40 uses the page fault information to generate a page mode signal that automatically selects an operating mode of the memory 12 based on the difference between the number of page faults and the number of non-page faults. The structure and operation of the page fault detector 40 are described in detail below. The address multiplexer 22, page fault detector 40, memory region decoder 16, memory controller 30 and refresh timer 34 together constitute a memory control unit.

The page fault detector 40 automatically selects an operating mode of memory 12 to provide the highest speed operation. When the row address supplied by CPU 10 changes infrequently, the page mode provides the highest speed operation. In page mode, the row address and the row address strobe are supplied to memory 12 so as to strobe the row address into memory 12. Then, successive column addresses are supplied to memory 12 on successive cycles without changing the row address. As long as the row address remains fixed, addressing of memory 12 is accomplished in one step per memory location rather than two.

The page mode becomes inefficient when the row address changes frequently. When the row address changes in the page mode, it is necessary to deassert the row address strobe and then reassert the row address strobe, thereby incurring a time penalty. When many page faults occur, the performance of the memory can be reduced by as much as 33%. In the non-page mode, the row address is reasserted on each burst or non-burst memory transfer, whether or not the row address changes. The non-page mode provides highest speed operation when the row address changes frequently.

Thus, the page mode is advantageous under some addressing conditions, and the non-page mode is advantageous under other addressing conditions. The frequency with which the row address changes depends on the software being run by CPU 10 and on how the software was compiled. The page fault detector 40 selects the operating mode which provides the highest speed. As a result, the memory control unit adapts during operation to the addresses supplied to it by the CPU 10 for highest speed operation.

It should be noted that when a refresh cycle is requested by the refresh timer 34, the row address strobe and the column address strobe must be deasserted in order to perform a refresh cycle. This will terminate the current page mode cycle but will not contribute to modifying the current mode. Refresh occurs relatively infrequently.

It should also be noted that when the adaptive memory controller is in page mode, the row address strobe signal will remain asserted until a CPU access causes a page fault or a refresh request occurs. This means that if the CPU suspends accesses to the memory 12 and then resumes accesses without causing a page fault, the row address strobe will remain asserted. Thus, it will be understood that as used herein, the phrase "successive transfers" refers to successive transfers to memory 12 and includes the situation where transfers to memory 12 are interrupted by the CPU 10 accessing another device or another section of memory.

A schematic diagram of one suitable implementation in the page fault detector 40 is shown in FIG. 2. The circuit shown in FIG. 2 is implemented as programmable logic array (PAL) devices 46 and 48. The PAL devices 46 and 48 receive the following signals from the CPU: CPU clock (CPUCLK1) address strobe (ADS), address lines (A12 to A22 and A28 to A31) and burst last (BLAST). The output signals from the page fault detector 40 are lower page fault (LPF), upper page fault (UPF) and page mode (PAGE). In the drawings, an "*" after a signal name indicates an active low signal. The page fault detection circuitry is divided between PAL devices 46 and 48. An active lower page fault LPF or upper page fault UPF signal indicates a page fault. Equations which specify the functions performed by PAL devices 46 and 48 are given in attached Appendix A and Appendix B, respectively. In the equations, the following symbols are used: "&" indicates a logical AND; "#" indicates a logical OR; "!" indicates an active low signal; and ":" indicates that the signal changes state on the clock edge. The remaining signals shown in FIG. 2 are intermediate signals which are accessed for test purposes.

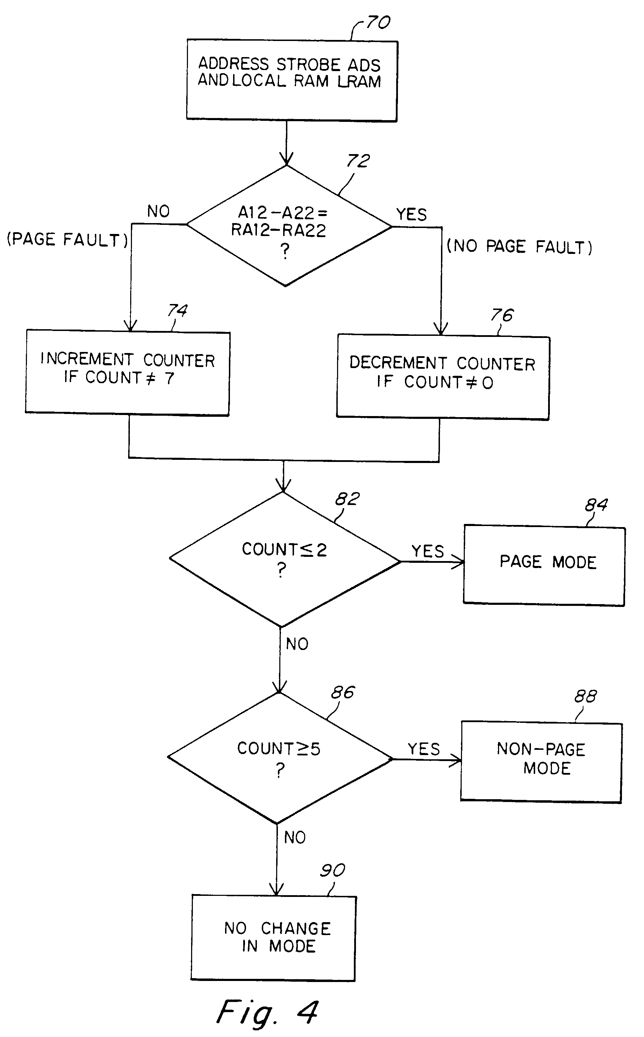

A functional block diagram of the page fault detector 40 is shown in FIG. 3. A flow diagram that illustrates the functions performed by the page fault detector is shown in FIG. 4. The upper address bits A28 to A31 are input to a local RAM decoder 50. When the address bits A28 to A31 have a bit combination which indicates that the CPU 10 is addressing local memory 12, a gate 52 is enabled. When the local memory 12 is not being accessed, the page fault detector 40 is inactivated. The address strobe ADS, which initiates a burst transfer, is input to gate 52. When the address strobe ADS is active and the local memory 12 is being addressed, the page fault detector circuitry is enabled by the output of gate 52 (step 70 in FIG. 4).

The middle address bits A12 to A22 of the address from CPU 10 are supplied to one set of inputs of a comparator 54. The address bits A12 to A22 are also input to a register 56. The contents of register 56 are updated on the trailing edge of the address strobe ADS. Thus, the outputs of register 56, RA12 to RA22, represent address bits A12 to A22 for the previous memory transfer. The register 56 outputs RA12 to RA22 are supplied to the other set of inputs of comparator 54. Comparator 54 thus compares the row address bits A12 to A22 of the current memory transfer with the row address bits RA12 to RA22 of the previous memory transfer (step 72 in FIG. 4). The comparator 54 is enabled only when address strobe ADS is active and the local memory is addressed.

The output of comparator 54 is a binary signal which indicates a page fault or no page fault for each memory access cycle. The comparator 54 provides outputs UPF and LPF because the circuitry of comparator 54 is divided between PAL devices 46 and 48. When the current row address A12 to A22 is the same as the previous row address RA12 to RA22, the comparator 54 output indicates no page fault. When the current row address A12 to A22 is different from the previous row address RA12 to RA22, even in a single bit, the comparator 54 output indicates a page fault. The page fault signal is supplied to the memory controller 30 (FIG. 1) and to a page fault counter 60.

The page fault counter 60 is clocked by the address strobe ADS signal when the local memory 12 is addressed. The page fault signal from comparator 54 functions as an up/down control of page fault counter 60. The page fault counter 60 is incremented by a page fault signal (step 74 in FIG. 4) and is decremented by a non-page fault signal from comparator 54 (step 76 in FIG. 4). Thus, the count value in page fault counter 60 represents the difference between the number of page faults and the number of non-page faults. The page fault counter 60 preferably has upper and lower count value limits which effectively place upper and lower limits on difference between the number of page faults and the number of non-page faults.

In one implementation of the present invention, page fault counter 60 is a three bit counter. The upper count value limit is 7, and the lower count value limit is 0. When the counter 60 contains a count value of 7 and a page fault is received, the count value is not incremented and remains at 7. Similarly, when the count value is 0 and a non-page fault is received, the count value is not decremented and remains at 0. The count value, which represents the difference between the number of page faults and the number of non-page faults, is therefore in a range between 0 and 7 in the above example.

The outputs of page fault counter 60, PFC0 to PFC2, are input to a mode selector 62. The mode selector 62 determines the operating mode of memory 12 based on the count value in counter 60, as best shown in FIG. 4. The count value in counter 60 is compared by mode selector 62 with upper and lower threshold values. When the count value contained in counter 60 is equal to or less than the lower threshold value, as determined in step 82, the memory 12 mode is set to page mode, as shown in step 84. A relatively low count value indicates a relatively small number of page faults, and operation in the page mode is faster. In the present example, the memory 12 mode is set to page mode when the count value is equal to or less than 2. When the count value in counter 60 is equal to or greater than the upper threshold value, as indicated in step 86, the memory 12 mode is set to non-page mode, as indicated in step 88. A relatively high count value indicates frequent page faults, and operation in the non-page mode is faster. In the present example, the memory 12 mode is set to non-page mode when the count value is equal to or greater than 5. When the count value is between the upper and lower threshold values (between 2 and 5 in the present example) the operating mode of the memory is not changed from its previous operating mode (step 90). The use of upper and lower threshold values for switching between page mode and non-page mode provides hysteresis which reduces the likelihood of frequent switching between page mode and non-page mode.

It will be understood that the parameters of the page fault counter 60 and the mode selector 62 can be varied within the scope of the present invention. Thus, the page fault counter 60 can include any desired number of bits. Furthermore, the upper and lower threshold values used by the mode selector 62 to control switching between page mode and non-page mode can be varied to provide a desired operating characteristic. Increasing the upper threshold value increases the required number of page faults to switch to the non-page mode, whereas decreasing the lower threshold value, increases the number of non-page faults required to switch to the page mode. The spacing between the upper and lower threshold values determines the amount of hysteresis, which in turn controls the frequency of switching between page mode and non-page mode.

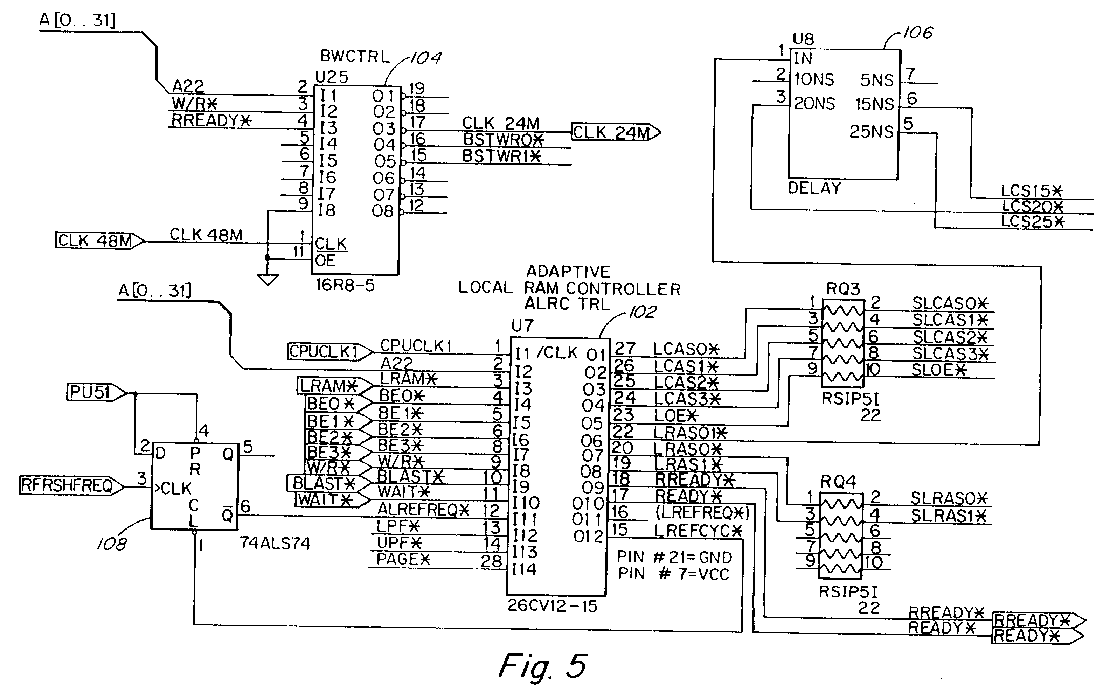

A schematic diagram of one implementation of the memory controller 30 is shown in FIG. 5. The memory controller 30 includes a PAL device 102 which provides the basic memory control signals, a PAL device 104 for burst write control, a delay generator 106 and a flip-flop 108. The PAL device 102 receives the following signals from the CPU 10: the CPU clock (CPUCLK1), address bit 22 (A22) which selects one of two banks of the local memory 12, byte enable bits (BE0, BE1, BE2 and BE3) a read/write signal (W/R), burst last (BLAST) and a wait signal (WAIT). In addition, the PAL device 102 receives a local RAM signal (LRAM) from the memory region decoder 16 and upper page fault (UPF), lower page fault (LPF) and page (PAGE) signals from the page fault detector 40. Outputs to the memory 12 include row address strobes (LRAS0 and LRAS1), column address strobes (LCAS0, LCAS1, LCAS2, and LCAS3) and output enable (LOE). A ready signal (READY) is supplied to the CPU 10, and a ready signal (RREADY) is provided to the burst write control PAL device 104 and to the address multiplexer 22. A row address strobe (LRAS01), which is asserted when either of the row address strobes LRAS0 or LRAS1 is asserted, is supplied by PAL device 102 to delay generator 106. A refresh request signal (ALREFREQ) is received by PAL device 102 from flip-flop 108, and a refresh cycle signal (LREFCYC) is supplied to flip-flop 108. The PAL device 102 includes a circuit which synchronizes the refresh request from refresh timer 34 and eliminates metastability.

The PAL device 104 receives bank select bit A22, read/write control (W/R), ready (RREADY) and a 48 MHz clock signal. The outputs from PAL device 104 include burst write control signals (BSTWR0 and BSTWR1) to enable writing in banks 0 and 1, respectively, of the memory 12. The equations which define the functions performed by PAL devices 102 and 104 are set forth in attached Appendix C and Appendix D, respectively. The symbols used in Appendices C and D are described above in connection with Appendices A and B.

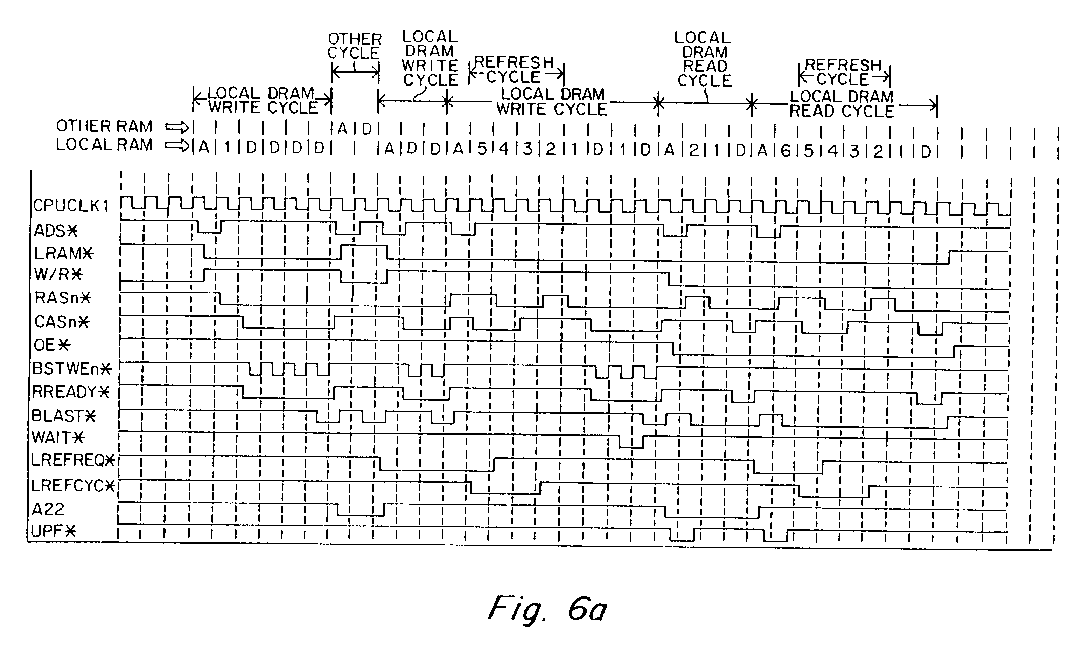

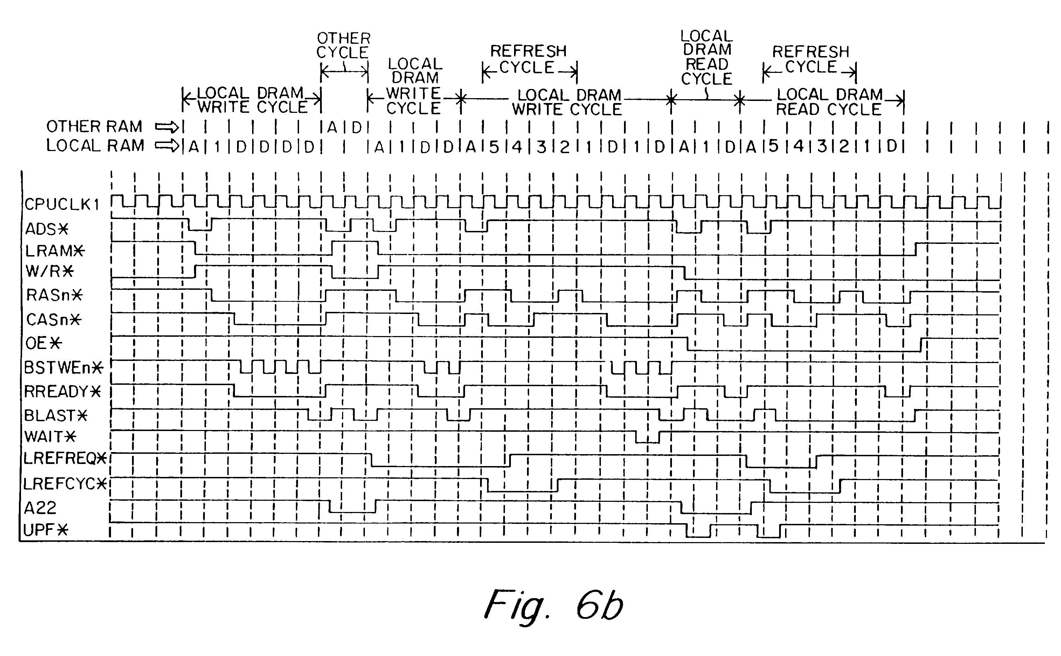

Waveforms associated with the operation of the memory controller 30 are shown in FIGS. 6A and 6b. A timing diagram for page mode operation is shown in FIG. 6a, and a timing diagram for non-page mode operation is shown in FIG. 6b.

In the present example, the CPU 10 is an Intel type 80960CA-25 which accesses memory in bursts of 1 to 4 cycles having the same row address. The burst cycle is initiated by the address strobe ADS and is terminated by the burst last (BLAST) signal. During the burst transfer process, the row address strobe is asserted and the row address is not changed. The burst transfer may be performed in either the page mode or the non-page mode. However, no change of mode occurs during a burst transfer. All mode changes occur between burst transfers. It will be understood that other CPU's which do not employ burst transfers can be utilized in the present invention. In either case, any change of operating mode is made after completion of a transfer.

As discussed above, the page mode signal (PAGE) controls the operating mode of memory 12. At the beginning of a burst or non-burst transfer, a decision is made as to the operating mode for this transfer in accordance with the selection process described above. When the system is operating in page mode and a page fault is not detected, the row address strobe RAS is kept asserted. When the system is operating in page mode and a page fault is detected, it is necessary to deassert the row address strobe RAS and then reassert the row address strobe. In this case, a time penalty is incurred. However, when frequent page faults occur, the system automatically switches to the non-page mode as described above, thereby adapting to the incoming address conditions for highest operating speed. In the non-page mode, the row address strobe RAS is automatically deasserted after each burst or non-burst transfer, whether or not the row address changes. This avoids the time penalty that would be incurred by deasserting and reasserting the row address strobe when a page fault occurs in page mode.

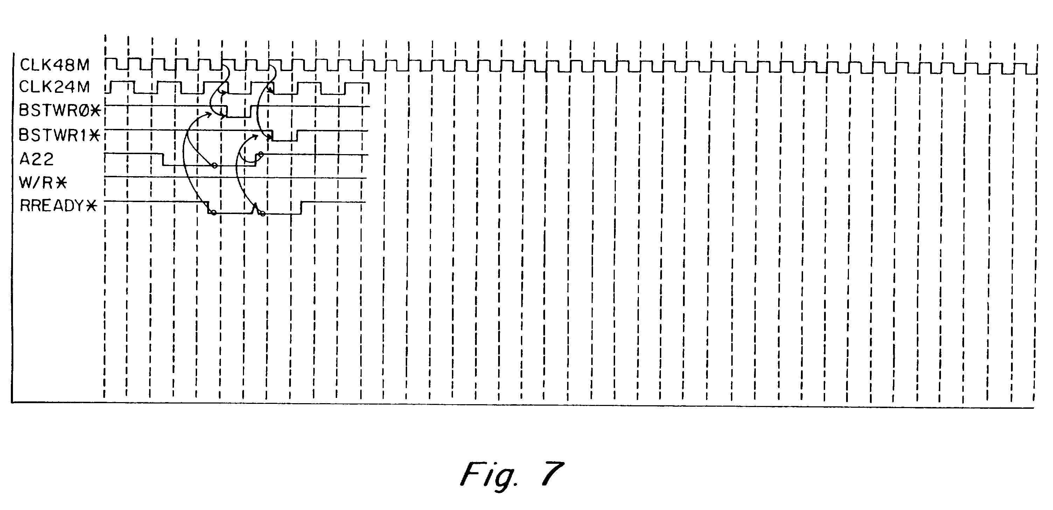

The burst write control PAL device 104 divides a 48 MHz input clock by 2 to provide a 24 MHz clock output. The 24 MHz clock output is the clock for the CPU 10. Waveforms associated with the PAL device 104 are shown in FIG. 7. The burst write control signals BSTWR0 and BSTWR1 are in phase with the 24 HMz clock output of the PAL device 104. The appropriate burst write control signal BSTWR0 or BSTWR1 is determined by the state of the bank select address bit A22.

The PAL device 102 generates a row address strobe LRAS01 which is asserted when either of the row address strobes LRAS0 or LRAS1 is asserted. The delay generator device 106 outputs delayed column select signals LCS15, LCS20 and LCS25, which are delayed with respect to row address strobe LRAS01 by 15, 20 and 25 nanoseconds, respectively. The control signals LCS15, LCS20 and LCS25 are used for high speed address multiplexing as described below.

The refresh timer 34 can be of conventional design. A refresh request signal is applied to the memory controller 30 through flip-flop 108 as shown in FIG. 5.

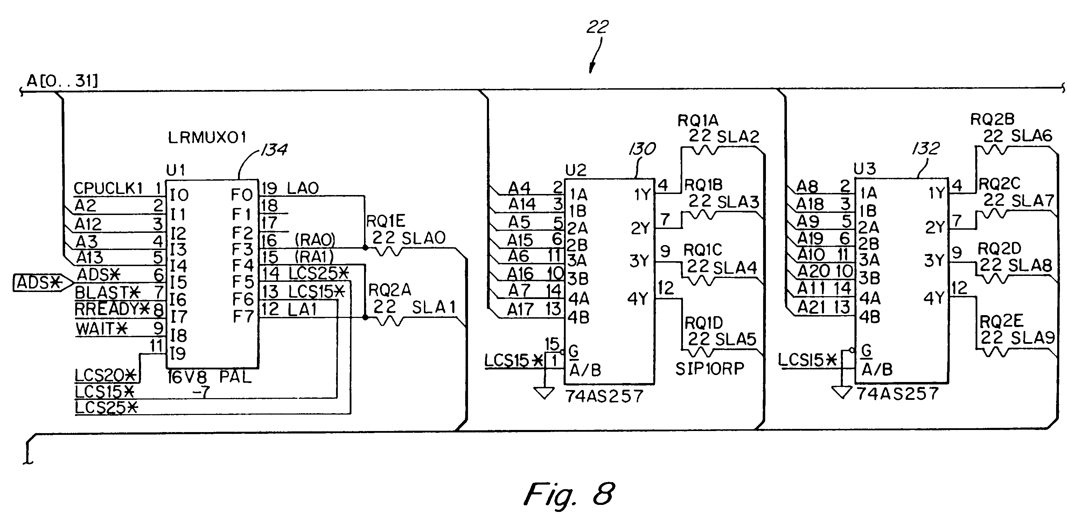

A schematic diagram of one implementation of the address multiplexer 22 is shown in FIG. 8. Multiplexers 130 and 132 select row address bits A14 to A21 or column address bits A4 to All and provide multiplexed address outputs SLA2 to SLA9, which are supplied to memory 12. The row address bits or column address bits are selected by delayed column select signal LCS15 applied to the select inputs of multiplexers 130 and 132.

In the example described above, the CPU 10 updates the low order column address bits A2 and A3 too slowly. To achieve the desired high speed operation, a special circuit is used to supply the low order address bits to the memory 12. The address multiplexer 22 includes an address multiplexer PAL device 134. The PAL device 134 receives row address bits A12 and A13, column address bits A2 and A3, address strobe ADS, burst last BLAST and WAIT signals from the CPU 10. The ready signal RREADY and the delayed column select signals LCS15, LCS20, and LCS25 from the memory controller 30 are also inputs to the PAL device 134. Outputs of the PAL device 134 include address bits LA0 and RA0, which are combined to form multiplexed address SLAO, and address bits LA1 and RA1, which are combined to form multiplexed address SLA1. The equations which define the functions performed by the PAL device 134 are set forth in attached Appendix E. The symbols used in Appendix E are described above in connection with Appendices A and B.

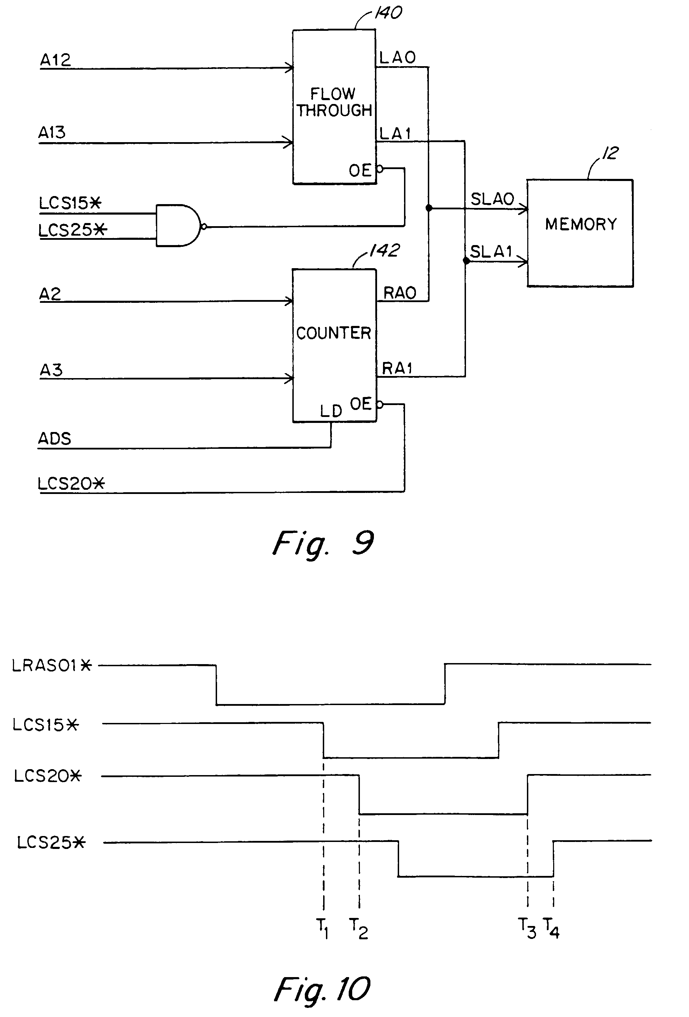

A functional block diagram that illustrates the operation of PAL device 134 is shown in FIG. 9. The low order row address bits A12 and A13 are input to a flow through unit 140. The flow through unit 140 is preferably implemented with tri-state gates. When the gate outputs are enabled, the outputs LA0 and LA1 are the same as inputs A12 and A13, respectively. When the flow through unit 140 is not enabled, the outputs are in a high impedance state. The low order column address bits A2 and A3 are input to a counter 142. The counter 142 has tri-state outputs RA0 and RA1 which are connected to outputs LA0 and LA1, respectively, of flow through unit 140. These outputs are the low order multiplexed address bits SLA0 and SLA1 supplied to memory 12.

As indicated above, the address strobe ADS indicates the first cycle of a burst transfer. The address strobe ADS is used to load the column address bits A2 and A3 of the first memory location in the burst transfer into counter 142. The counter 142 is then incremented by the clock when the RREADY signal from memory controller 30 is asserted and the WAIT signal from the CPU 10 is deasserted. This provides successive column address bits to memory 12. This circuit provides faster addressing than would be obtained by waiting for the column address bits from the CPU 10. The counter 142 can be used because the CPU column address is always incremented from its initial value during a burst transfer. The incrementing of counter 142 by the ready signal RREADY and the wait signal WAIT continues until the burst transfer is completed, as indicated by the BLAST and WAIT signals.

The waveforms of the combined row address strobe LRAS01 and the delayed column select signals LCS15, LCS20 and LCS25 are shown in FIG. 10. A row address strobe is applied to memory 12 when LRAS01 is asserted. In FIG. 10, all signals are asserted in a logic zero state. As noted above, the delayed column select LCS15 is applied to multiplexers 130 and 132. The row address is available upon assertion of combined row address strobe LRAS01. The row address at the outputs of multiplexers 130 and 132 is strobed into the memory 12 prior to the assertion of LCS15. After a delay of 15 nanoseconds, the column select LCS15 is asserted and the multiplexers 130 and 132 output the column address to memory 12 on multiplexed address lines SLA2 to SLA9. While the column select LCS15 remains asserted, a burst of column addresses is applied to memory 12 on multiplexed address lines SLA2 to SLA9.

As discussed above, the tri-state outputs of flow through unit 140 and counter 142 are connected together to supply the low order multiplexed address bits SLA0 and SLA1. The outputs of flow through unit 140 and counter 142 are controlled by the delayed column select signals LCS15, LCS20 and LCS25 to insure that only one device is enabled at any instant of time. The column select signals LCS15 and LCS25 are applied through an AND gate 146 to the output enable of flow through unit 140. The column select signal LCS20 is applied to the output enable of counter 142. With this arrangement, the row address bits LA0 and LA1 stop driving memory 12 when column select LCS15 is asserted at time T₁ (see FIG. 10). After a delay of 5 nanoseconds, column select LCS20 is asserted at time T₂ and the column address bits RA0 and RA1 start driving memory 12. When column select LCS20 is deasserted at time T₃, column address lines RA0 and RA1 stop driving memory 12. When column select LCS25 is deasserted at time T₄, the flow through unit 140 is enabled and row address bits LAO and LA1 start driving memory 12. This arrangement insures that the outputs of flow through unit 140 and counter 142 are never enabled at the same time.

The technique for adaptive selection of operating mode in accordance with the present invention can be utilized with any memory that requires multiplexed addressing and with any CPU or other address source. The burst transfer mode is not required for implementation of the invention. The technique for selection of operating mode can be utilized to increase the speed of both reading and writing.

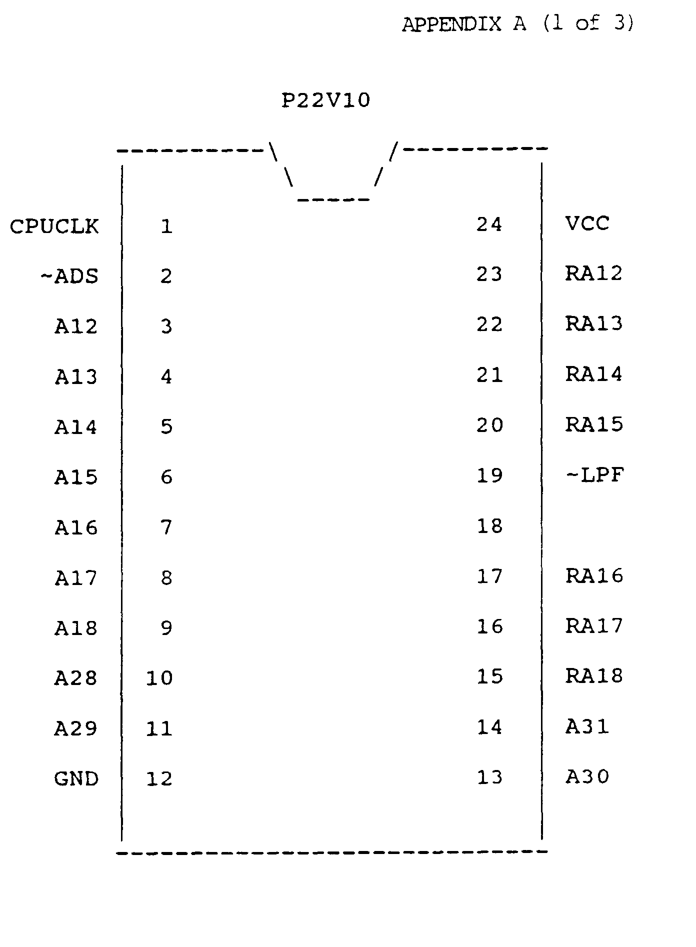

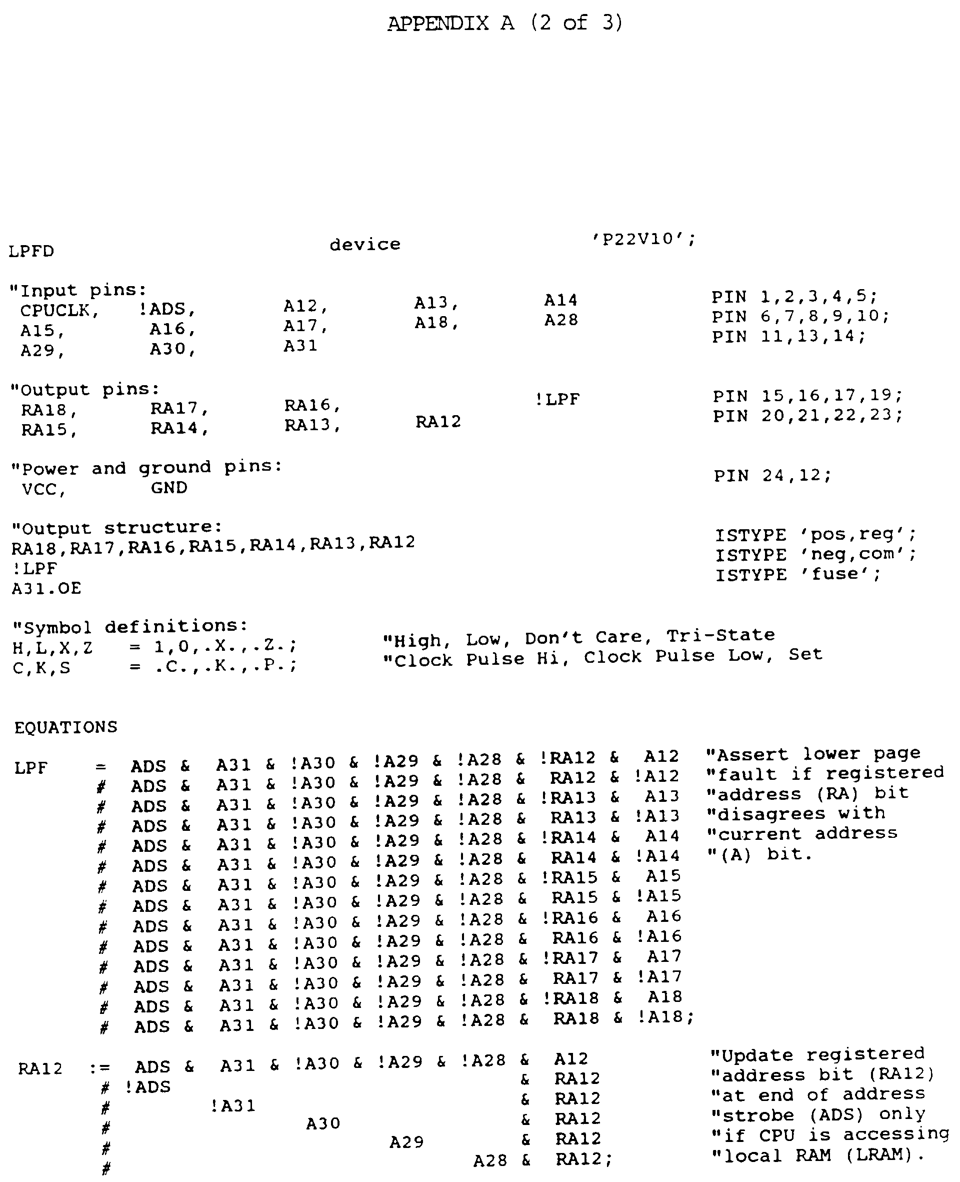

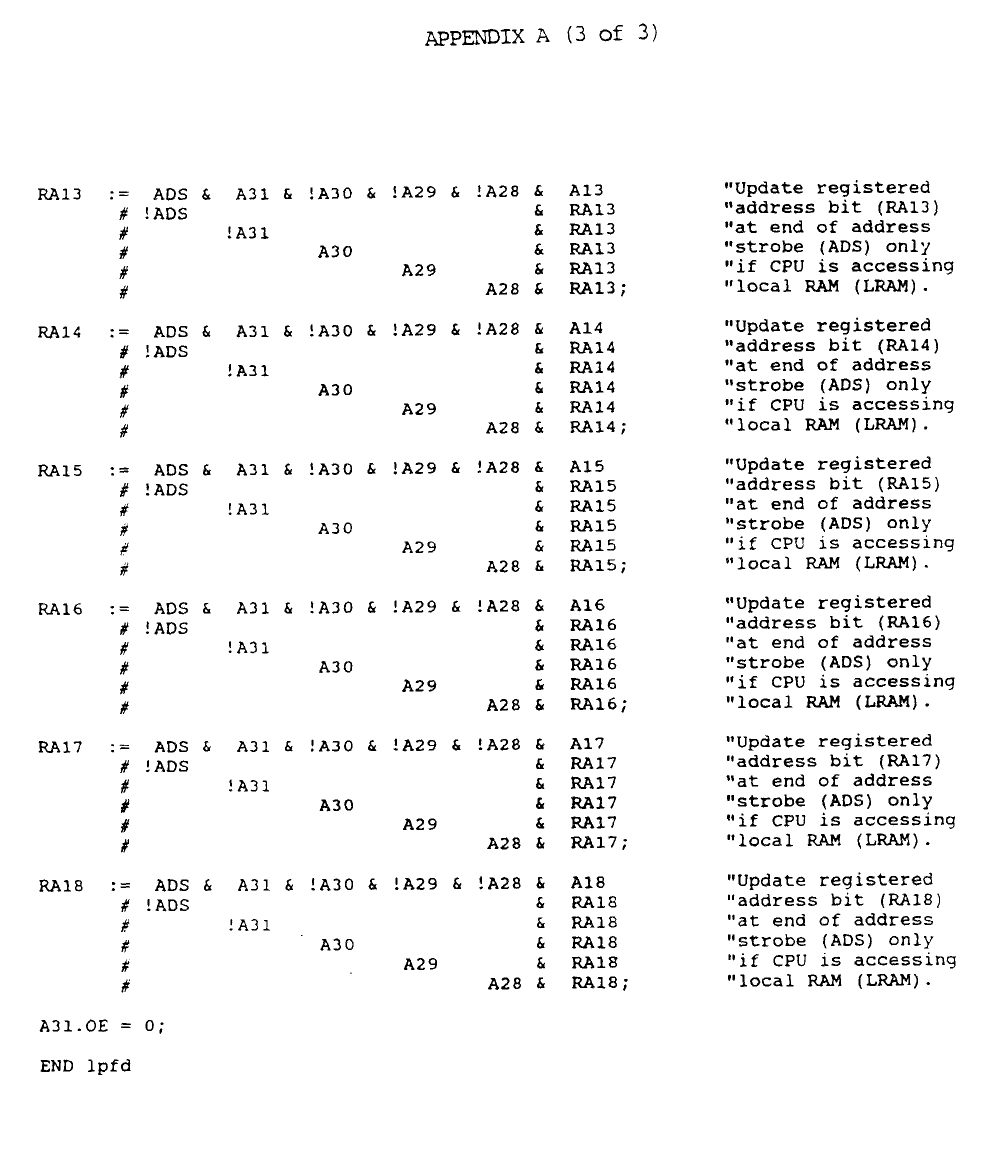

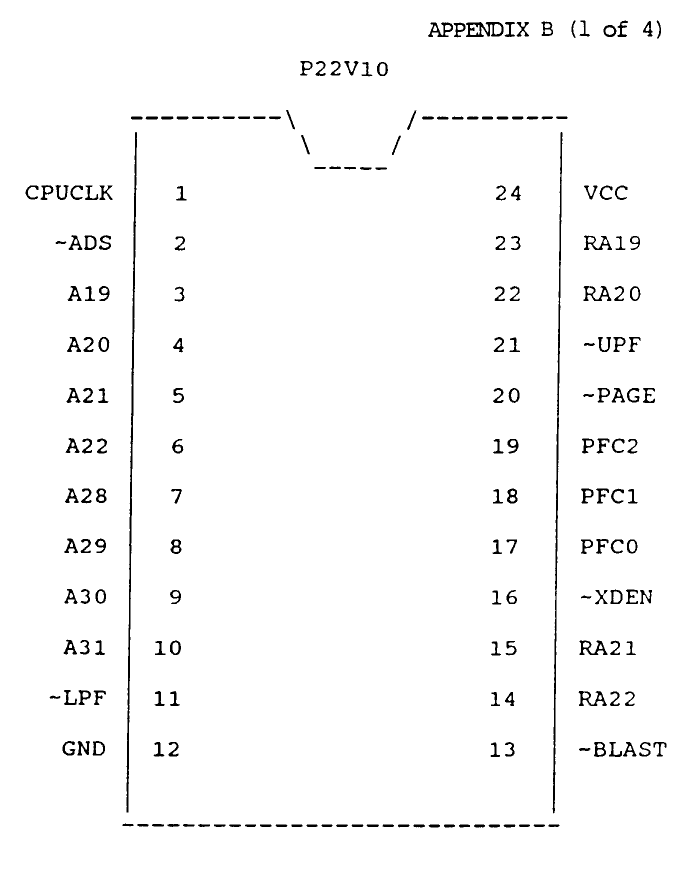

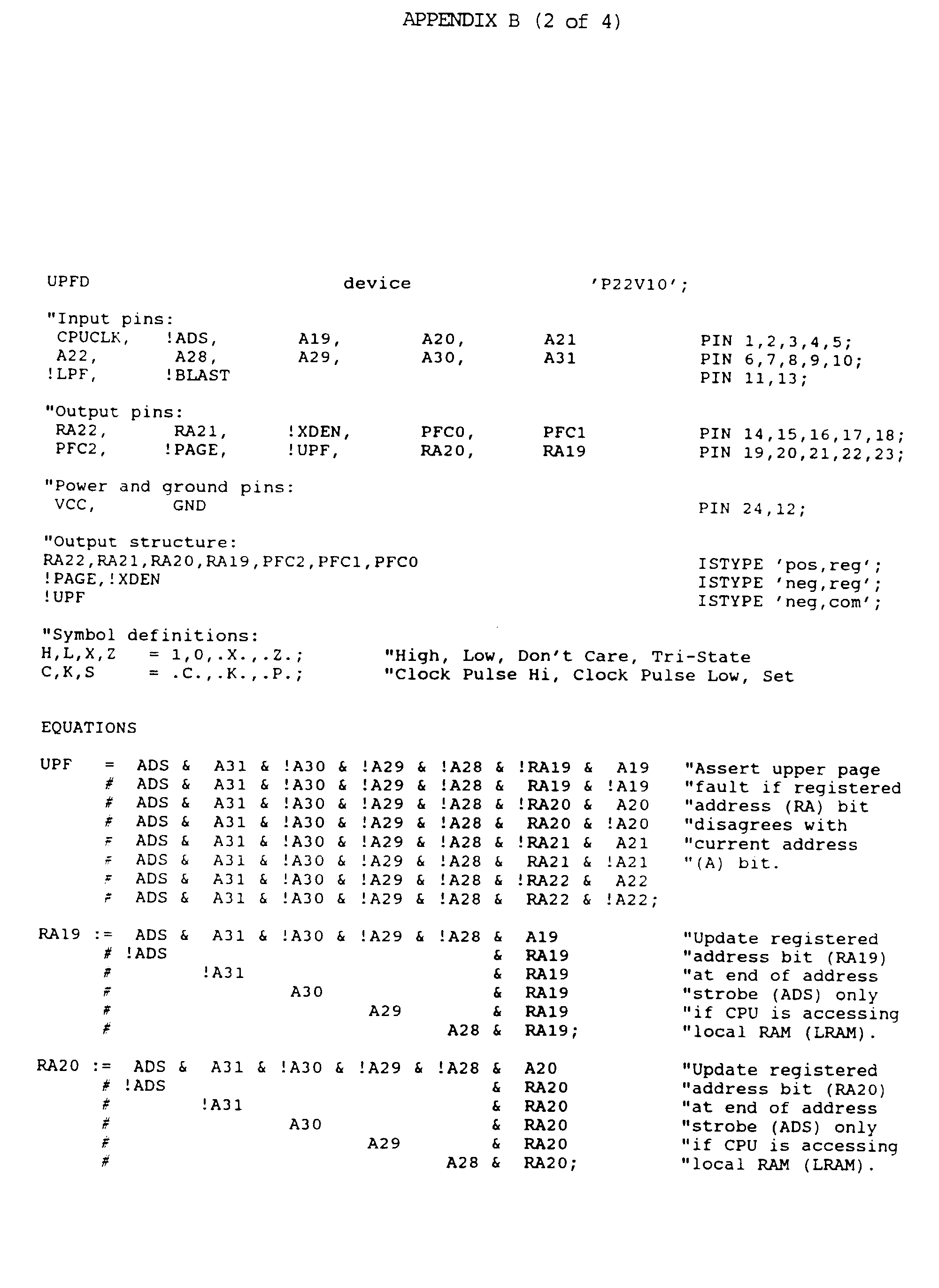

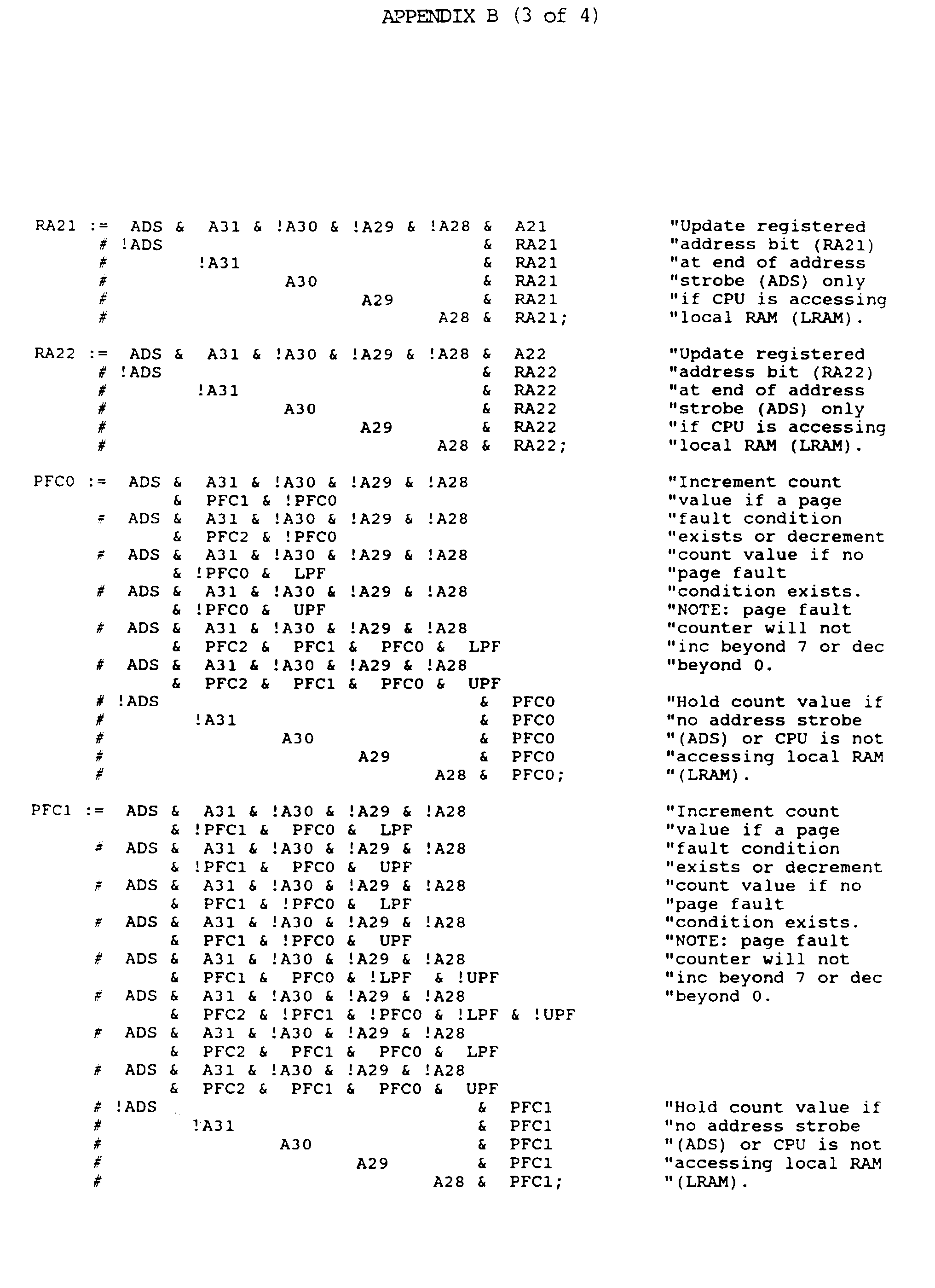

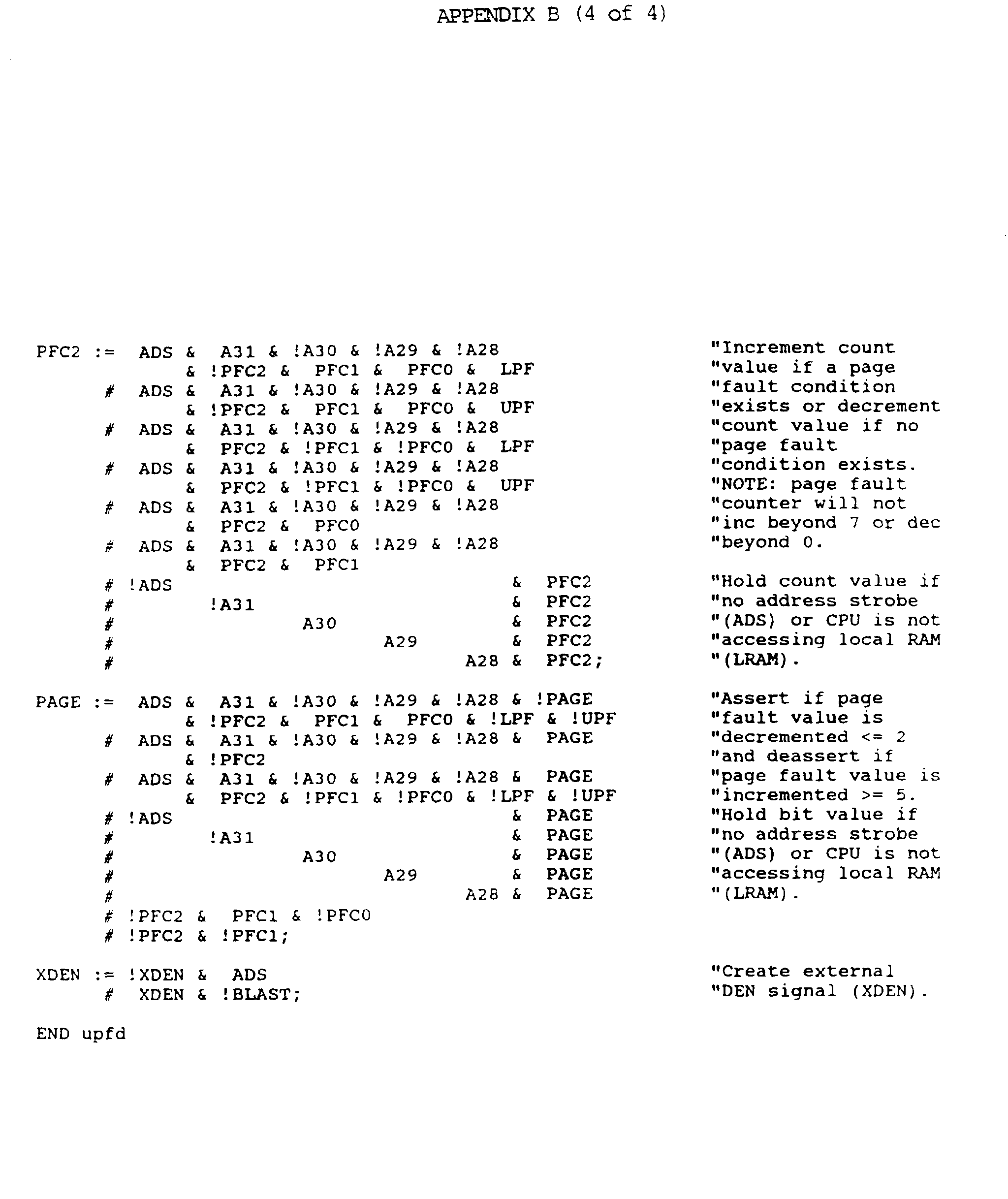

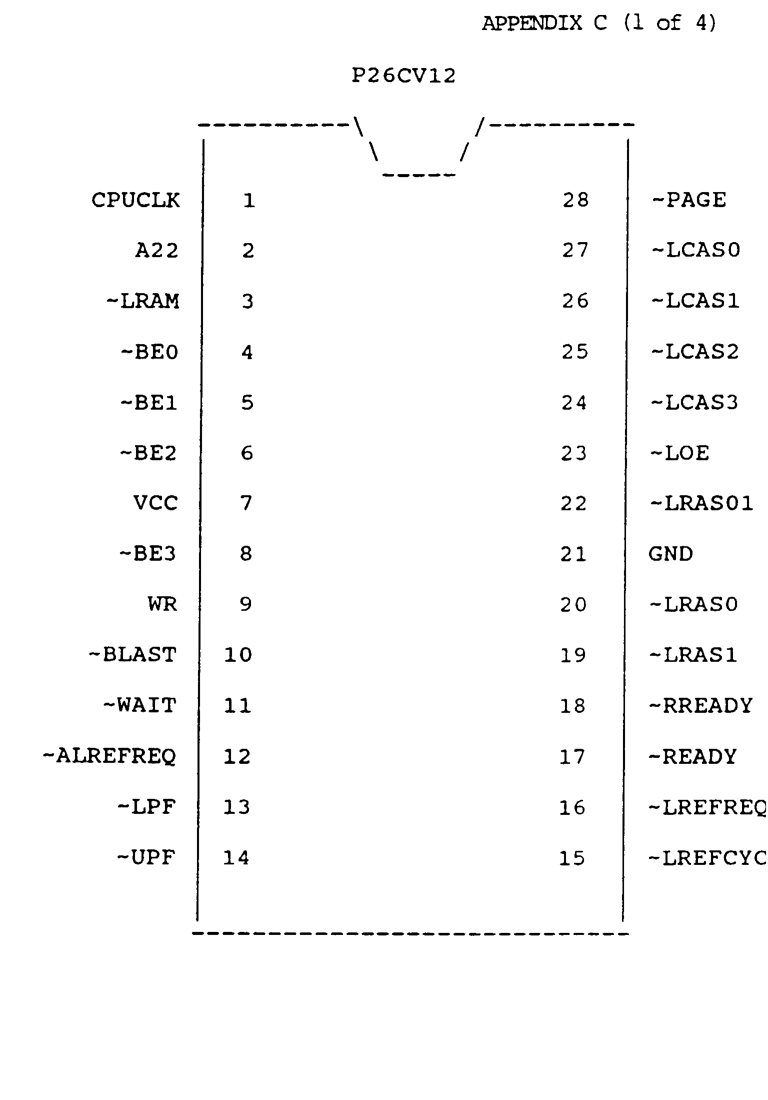

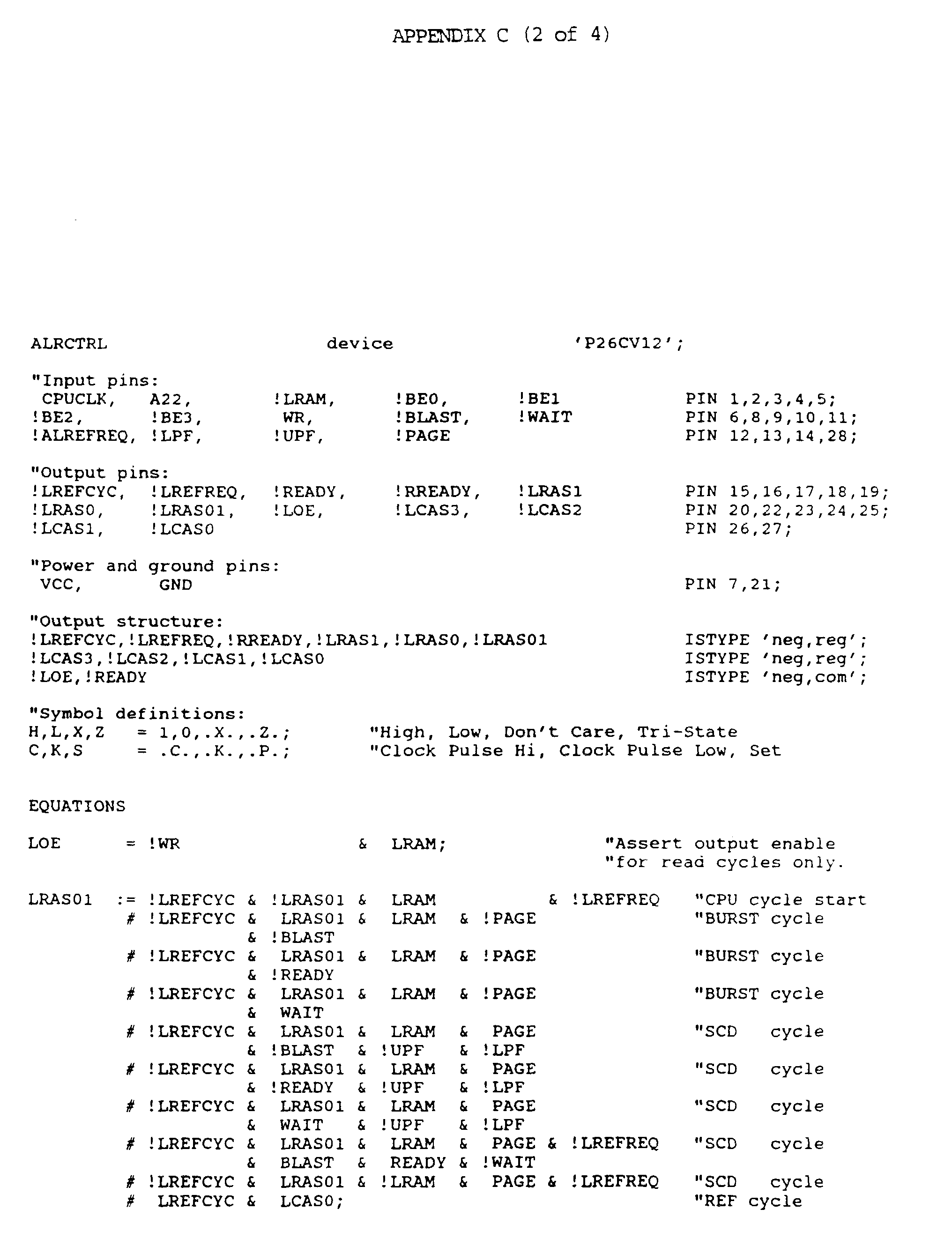

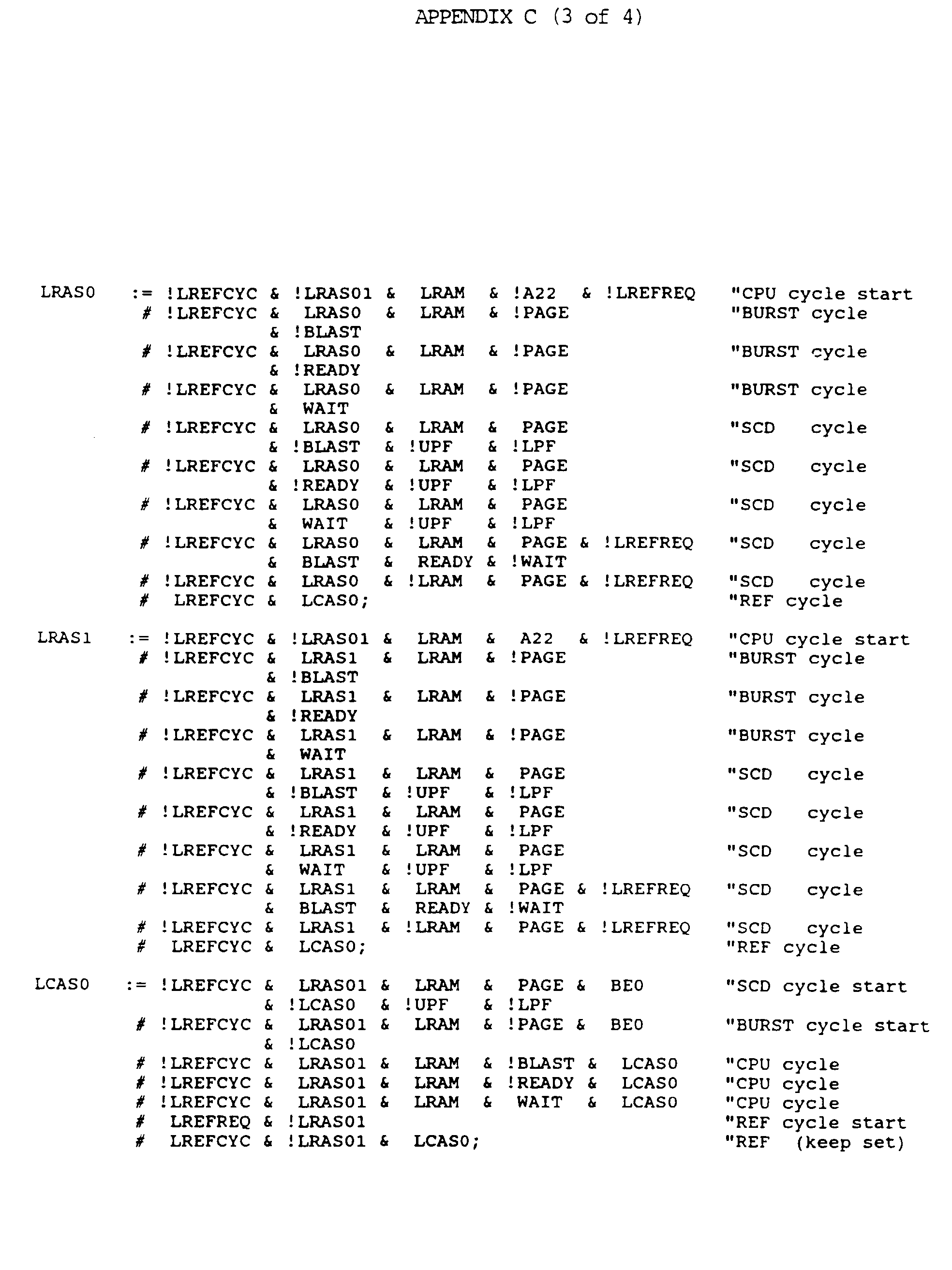

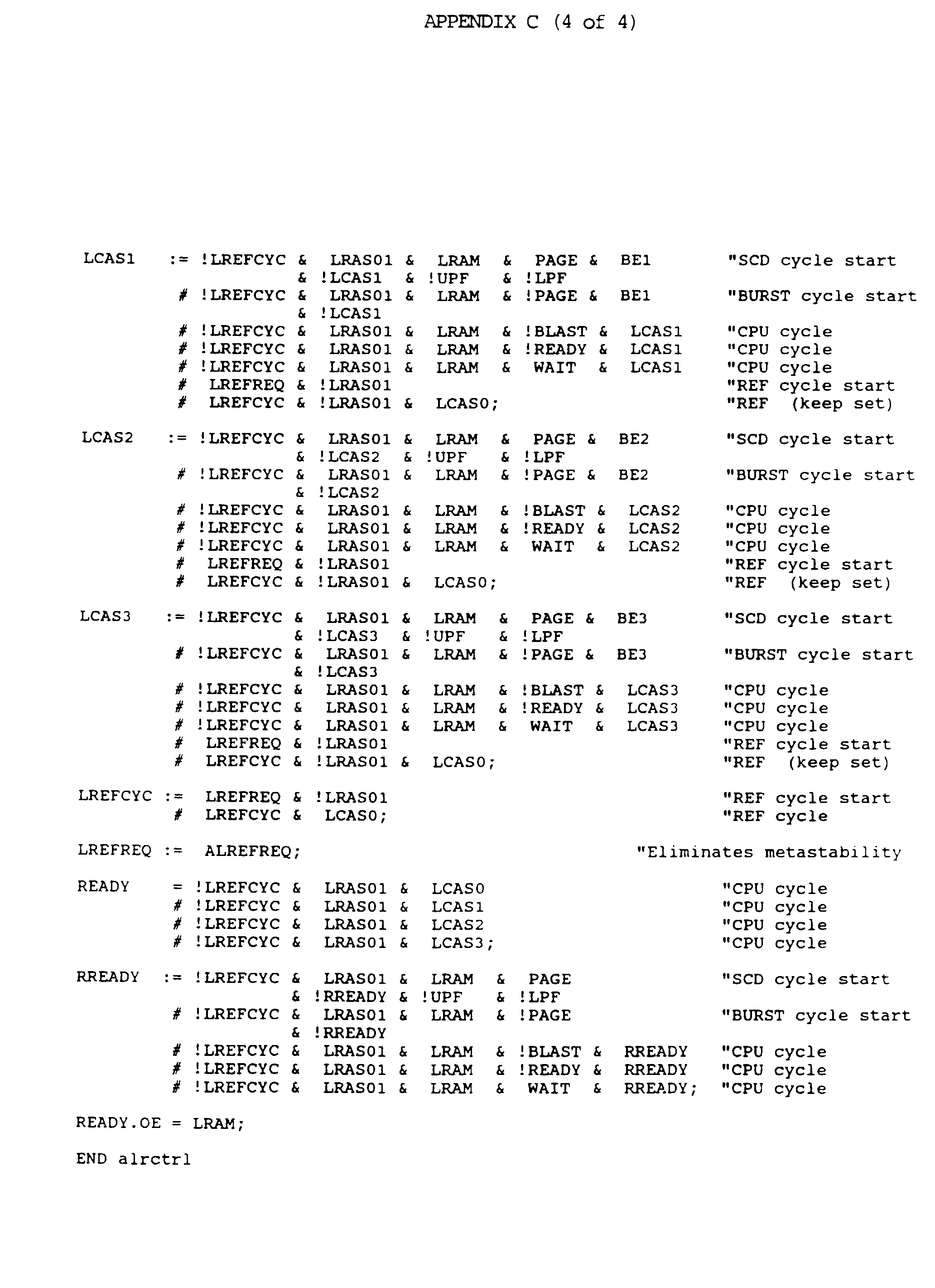

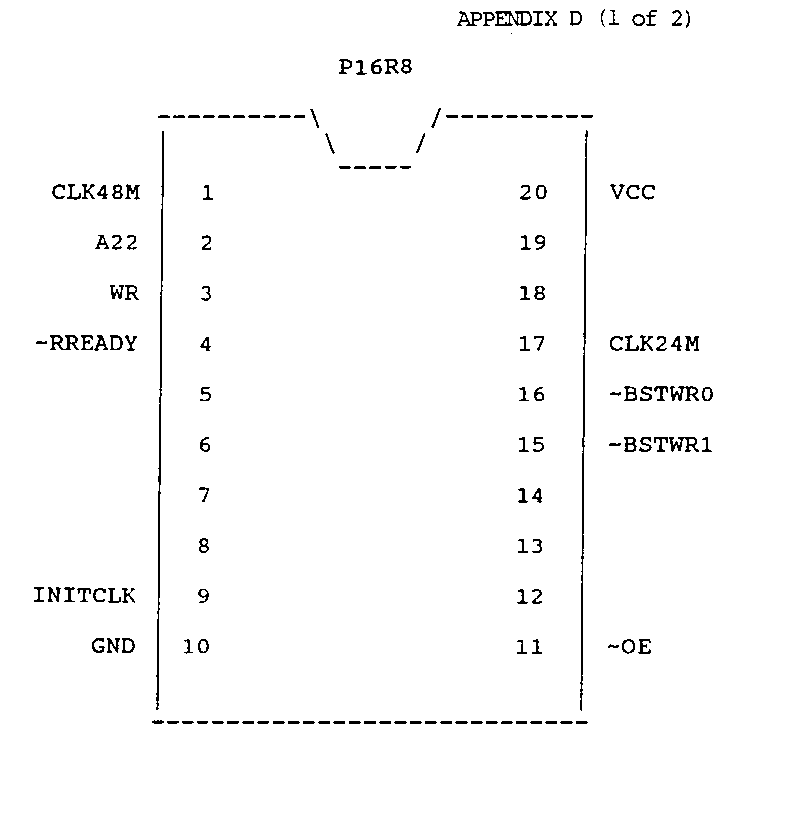

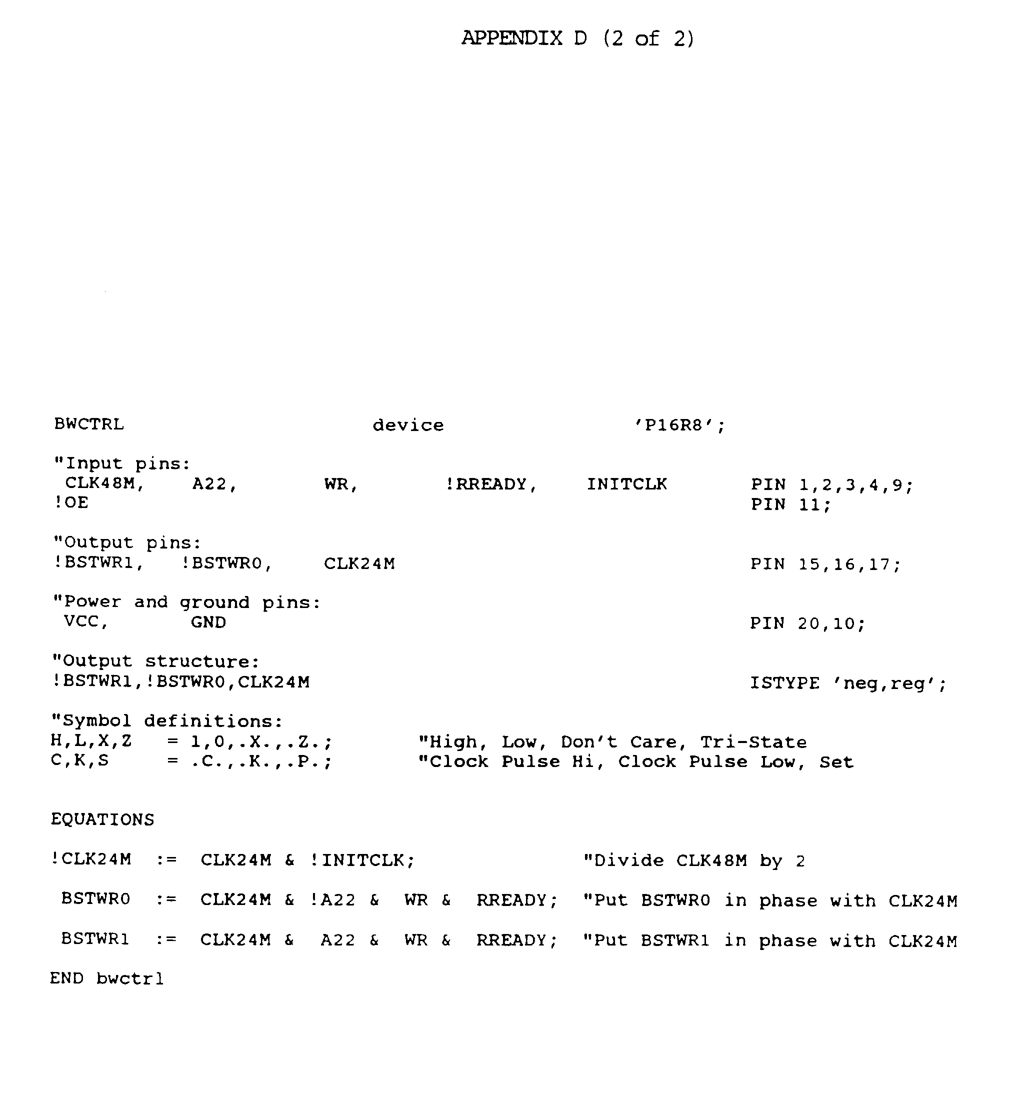

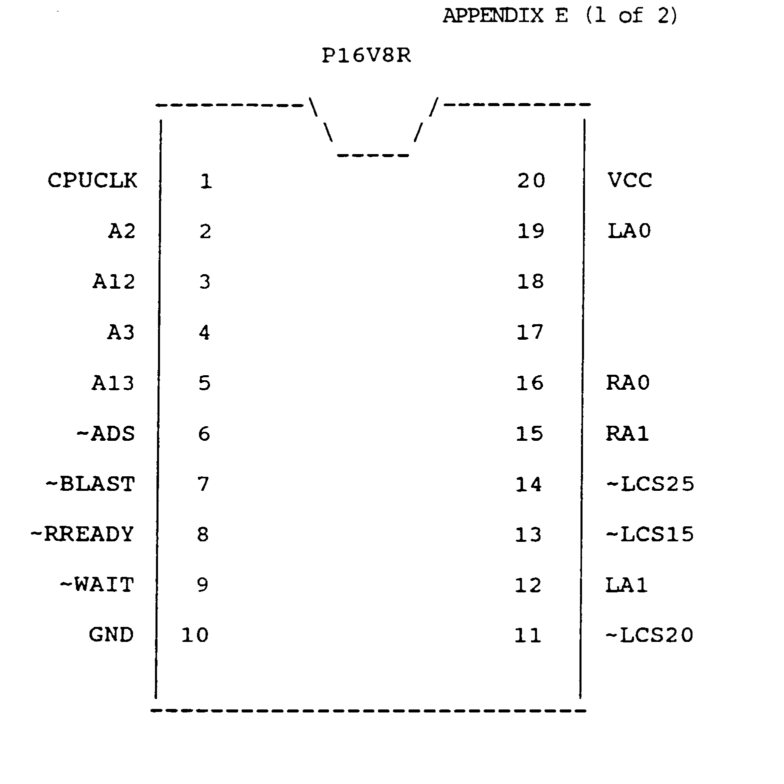

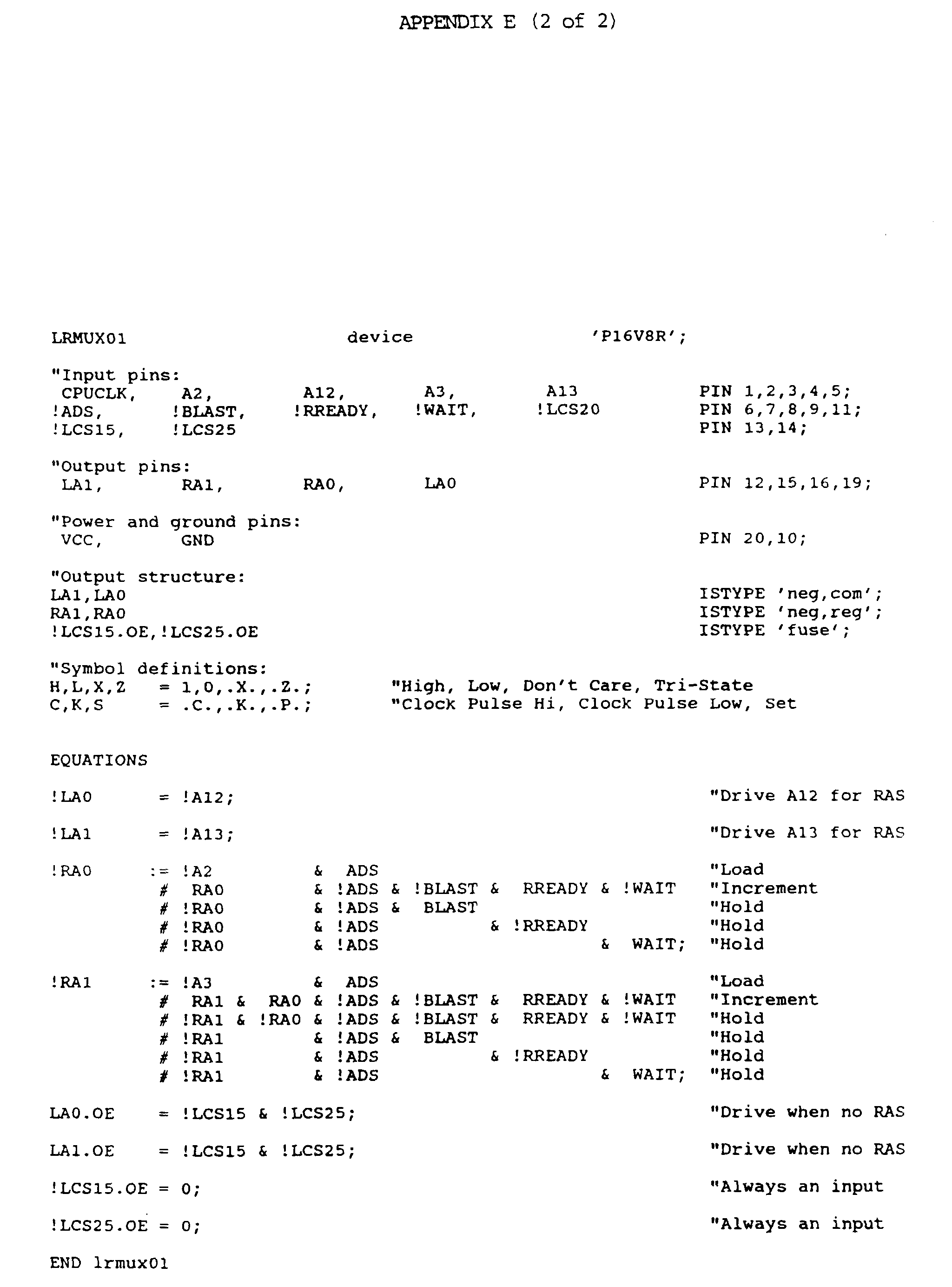

## Claims

1. A method for controlling a random access memory (12) having multiplexed address lines (24) for sequentially receiving a first address portion (A <21:12>) and a second address portion (A <11:2>) of an address, said memory (12) operating in non-page or page modes which respectively use or not use the receiving of said first address portion on said multiplexed address lines (24), said method including the steps of:
sequentially supplying addresses (70) for accessing said memory, each address including a first address portion and a second address portion;
detecting a page fault (72) when the first address portion changes on successive transfers to said memory and detecting a non-page fault when the first address portion remains the same on successive transfers to said memory;
characterized in that said method further includes the steps of:
evaluating a difference (82, 86) between the number of page faults and the number of non-page faults during operation of said memory; and
automatically selecting an operating mode (84, 88) of said memory in response to said difference to provide the highest operating speed, wherein the step of automatically selecting the operating mode includes operating said memory in a non-page mode (88) when said difference is equal to or greater than an upper threshold value and operating said memory in a page mode (84) when said difference is equal to or less than a lower threshold value.

2. A method as defined in claim 1 wherein said first address portion comprises a row address portion and wherein the step of detecting a page fault includes comparing row address portions of said address on successive transfers to said memory, a page fault being indicated when said row address portions are different on successive transfers to said memory.

3. A method as defined in claim 2 wherein the step of evaluating said difference includes changing a count value in one direction (74) in response to each page fault and changing said count value in the opposite direction (76) in response to each non-page fault, said count value representing said difference.

4. A method as defined in claim 1 wherein the step of automatically selecting the operating mode includes switching to a non-page mode (88) when said memory is operating in a page mode and said difference becomes equal to or greater than the upper threshold value limit, and switching to the page mode (84) when said memory is operating in the non-page mode and said difference becomes equal to or less than the lower threshold value.

5. A method as defined in claim 4 wherein the step of automatically selecting the operating mode includes remaining in the same operating mode (90) when said difference is between said upper and lower threshold values.

6. A method as defined in claim 2 wherein the step of evaluating said difference includes incrementing a count value in response to each page fault (74) and decrementing said count value in response to each non-page fault (76), said count value representing said difference.

7. A method as defined in claim 6 further including the step of maintaining said count value within upper and lower count value limits.

8. Apparatus for controlling a random access memory (12) having multiplexed address lines (24) for sequentially receiving a first address portion (A <21:12>) and a second address portion (A <11:2>) of an address, said memory (12) operating in non-page or page modes which respectively use or not use the receiving of said first address portion on said multiplexed address lines (24), said apparatus including:
means (22) for sequentially supplying addresses for accessing said memory, each address including a first address portion and a second address portion;
means (54) for detecting a page fault when the first address portion changes on successive transfers to said memory and for detecting a non-page fault when the first address portion remains the same on successive transfers to said memory;
characterized in that said apparatus further includes:
means (60) for determining a difference between the number of page faults and the number of non-page faults during operation of said memory; and
means (62) for automatically selecting an operating mode of said memory in response to said difference to provide the highest operating speed, wherein said means (62) for automatically selecting the operating mode includes means for operating said memory in a non-page mode when said difference is equal to or greater than an upper threshold value and for operating said memory in a page mode when said difference is equal to or less than a lower threshold value.

9. Apparatus as defined in claim 8 wherein said means for detecting a page fault comprises means (56) for storing the first address portion of each address and means (54) for comparing a current first address portion with the previous first address portion and for providing a page fault signal when said first address portions are different on successive transfers to said memory.

10. Apparatus as defined in claim 8 wherein said means for determining a difference includes a counter (60) and means (54) for incrementing said counter in response to each page fault and for decrementing said counter in response to each non-page fault, a count value in said counter representing said difference.

11. Apparatus as defined in claim 10 further including means for maintaining the count value in said counter within upper and lower count value limits.

12. Apparatus as defined in claim 8 wherein said means (62) for automatically selecting the operating mode includes means for switching to a non-page mode when said memory is operating in a page mode and said difference becomes equal to or greater than the upper threshold value and for switching to the page mode when said memory is operating in the non-page mode and said difference becomes equal to or less than the lower threshold value.

13. Apparatus as defined in claim 12 wherein said means (62) for automatically selecting the operating mode includes means for remaining in the same operating mode when said difference is between said upper and lower threshold values.

## Patentansprüche

1. Ein Verfahren zum Steuern eines Direktzugriffspeichers (12), der multiplexte Adressenleitungen (24) zum sequentiellen Empfangen eines ersten Adressenteils (A<21:12>) und eines zweiten Adressenteils (A<11:2>) einer Adresse aufweist, wobei der Speicher (12) in Nicht-Page- oder Page-Modi arbeitet, welche jeweils den Empfang des ersten Adressenteils auf den multiplexten Adressenleitungen (24) verwenden oder nicht verwenden, wobei das Verfahren die Schritte umfaßt, daß
sequentiell Adressen (70) zum Zugreifen auf den Speicher zugeführt werden, wobei jede Adresse einen ersten Adressenteil und einen zweiten Adressenteil umfaßt,
ein Page-Fehler (72) detektiert wird, wenn der erste Adressenteil sich bei aufeinanderfolgenden Übertragungen zu dem Speicher ändert, und ein Nicht-Page-Fehler detektiert wird, wenn der erste Adressenteil bei aufeinanderfolgenden Übertragungen zu dem Speicher gleich bleibt,
dadurch gekennzeichnet,
daß das Verfahren weiter die Schritte umfaßt, daß
eine Differenz (82, 86) zwischen der Anzahl von Page-Fehlern und der Anzahl von Nicht-Page-Fehlern während des Betriebes des Speichers ausgewertet wird und
automatisch ein Betriebsmodus (84, 88) des Speichers in Abhängigkeit von der Differenz ausgewählt wird, um für die höchste Betriebsgeschwindigkeit zu sorgen, worin der Schritt des automatischen Auswählens des Betriebsmodus ein Betreiben des Speichers in einem Nicht-Page-Modus (88), wenn die Differenz gleich oder größer als ein oberer Schwellenwert ist, und ein Betreiben des Speichers in einem Page-Modus (84) umfaßt, wenn die Differenz gleich oder kleiner als ein unterer Schwellenwert ist.

2. Ein Verfahren nach Anspruch 1, worin der erste Adressenteil einen Zeilenadressenteil umfaßt, und worin der Schritt des Detektierens eines Page-Fehlers umfaßt, daß Zeilenadressenteile der Adresse bei aufeinanderfolgenden Übertragungen zu dem Speicher verglichen werden, wobei ein Page-Fehler angezeigt wird, wenn die Zeilenadressenteile bei aufeinanderfolgenden Übertragungen zu dem Speicher unterschiedlich sind.

3. Ein Verfahren nach Anspruch 2, worin der Schritt des Auswertens der Differenz umfaßt, daß ein Zählwert in die eine Richtung (74) in Abhängigkeit von jedem Page-Fehler geändert wird, und der Zählwert in die entgegengesetzte Richtung (76) in Abhängigkeit von jedem Nicht-Page-Fehler geändert wird, wobei der Zählwert die Differenz darstellt.

4. Ein Verfahren nach Anspruch 1, worin der Schritt des automatischen Auswählens des Betriebsmodus umfaßt, daß in einen Nicht-Page-Modus (88) geschaltet wird, wenn der Speicher in einem Page-Modus arbeitet und die Differenz gleich oder größer als die obere Schwellenwertgrenze wird, und in den Page-Modus (84) geschaltet wird, wenn der Speicher in dem Nicht-Page-Modus arbeitet und die Differenz gleich oder kleiner als der untere Schwellenwert wird.

5. Ein Verfahren nach Anspruch 4, worin der Schritt des automatischen Auswählens des Betriebsmodus umfaßt, daß in dem gleichen Betriebsmodus (90) verblieben wird, wenn die Differenz zwischen den oberen und unteren Schwellenwerten liegt.

6. Ein Verfahren nach Anspruch 2, worin der Schritt des Auswertens der Differenz umfaßt, daß ein Zählwert in Abhängigkeit von jedem Page-Fehler (74) inkrementiert wird, und der Zählwert in Abhängigkeit von jedem Nicht-Page-Fehler (76) dekrementiert wird, wobei der Zählwert die Differenz darstellt.

7. Ein Verfahren nach Anspruch 6, welches weiter den Schritt umfaßt, daß der Zählwert innerhalb oberer und unterer Zählwertgrenzen gehalten wird.

8. Vorrichtung zum Steuern eines Direktzugriffspeichers (12), der multiplexte Adressenleitungen (24) zum sequentiellen Empfangen eines ersten Adressenteils (A<21:12>) und eines zweiten Adressenteils (A<11:2>) einer Adresse aufweist, wobei der Speicher (12) in Nicht-Page- oder Page-Modi arbeitet, welche jeweils den Empfang des ersten Adressenteils auf den multiplexten Adressenleitungen (24) verwenden oder nicht verwenden, wobei die Vorrichtung umfaßt:
Mittel (22) zum sequentiellen Zuführen von Adressen zum Zugreifen auf den Speicher, wobei jede Adresse einen ersten Adressenteil und einen zweiten Adressenteil umfaßt,
Mittel (54) zum Detektieren eines Page-Fehlers, wenn sich der erste Adressenteil bei aufeinanderfolgenden Übertragungen zu dem Speicher ändert, und zum Detektieren eines Nicht-Page-Fehlers, wenn der erste Adressenteil bei aufeinanderfolgenden Übertragungen zu dem Speicher gleich bleibt,
dadurch gekennzeichnet,
daß die Vorrichtung weiter umfaßt
Mittel (60) zum Bestimmen einer Differenz zwischen der Anzahl von Page-Fehlern und der Anzahl von Nicht-Page-Fehlern während des Betriebes des Speichers und
Mittel (62) zum automatischen Auswählen eines Betriebsmodus des Speichers in Abhängigkeit von der Differenz, um für die höchste Betriebsgeschwindigkeit zu sorgen, worin das Mittel (62) zum Auswählen des Betriebsmodus Mittel zum Betreiben des Speichers in einem Nicht-Page-Modus, wenn die Differenz gleich oder größer als ein oberer Schwellenwert ist, und zum Betreiben des Speichers in einem Page-Modus umfaßt, wenn die Differenz gleich oder kleiner als ein unterer Schwellenwert ist.

9. Vorrichtung nach Anspruch 8, worin das Mittel zum Detektieren eines Page-Fehlers Mittel (56) zum Speichern des ersten Adressenteils jeder Adresse und Mittel (54) zum Vergleichen eines gegenwärtigen ersten Adressenteils mit dem vorhergehenden ersten Adressenteil und zum Liefern eines Page-Fehler-Signals umfaßt, wenn die ersten Adressenteile bei aufeinanderfolgenden Übertragungen zu dem Speicher unterschiedlich sind.

10. Vorrichtung nach Anspruch 8, worin das Mittel zum Bestimmen einer Differenz einen Zähler (60) und Mittel (54) zum Inkrementieren des Zählers in Abhängigkeit von jedem Page-Fehler und zum Dekrementieren des Zählers in Abhängigkeit von jedem Nicht-Page-Fehler umfaßt, wobei ein Zählwert in dem Zähler die Differenz darstellt.

11. Vorrichtung nach Anspruch 10, welche weiter Mittel zum Halten des Zählwertes in dem Zähler innerhalb oberer und unterer Zählwertgrenzen umfaßt.

12. Vorrichtung nach Anspruch 8, worin das Mittel (62) zum automatischen Auswählen des Betriebsmodus Mittel zum Schalten in einen Nicht-Page-Modus, wenn der Speicher in einem Page-Modus arbeitet und die Differenz gleich oder größer als der obere Schwellenwert wird, und zum Schalten in den Page-Modus umfaßt, wenn der Speicher in dem Nicht-Page-Modus arbeitet und die Differenz gleich oder kleiner als der untere Schwellenwert wird.

13. Vorrichtung nach Anspruch 12, worin das Mittel (62) zum automatischen Auswählen des Betriebsmodus Mittel zum Verbleiben in dem gleichen Betriebsmodus umfaßt, wenn die Differenz zwischen den oberen und unteren Schwellenwerten liegt.

## Revendications

1. Procédé de commande d'une mémoire à accès direct (12) possédant des lignes multiplexées (24) de transmission d'adresses servant à recevoir séquentiellement une première partie (A < 21: 12 >) et une seconde partie d'adresse (A < 11:2 >) d'une adresse, ladite mémoire (12) fonctionnant selon un mode sans page ou un mode à pages, qui respectivement utilise ou non la réception de ladite première partie d'adresse dans lesdites lignes multiplexées (24) de transmission d'adresses, ledit procédé comprenant les étapes consistant à :
délivrer séquentiellement des adresses (70) pour accéder à ladite mémoire, chaque adresse comprenant une première partie et une seconde partie;
détecter un besoin de page (72) lorsque la première partie de l'adresse change lors de transferts successifs à ladite mémoire, et détecter un non besoin de page lorsque la première partie de l'adresse reste identique lors de transferts successifs à ladite mémoire;
caractérisé en ce que ledit procédé inclut en outre les étapes consistant à :
évaluer une différence (82,86) entre le nombre de besoins de pages et le nombre de non besoins de page pendant le fonctionnement de ladite mémoire; et
sélectionner automatiquement un mode de fonctionnement (84,88) de ladite mémoire en réponse à ladite différence pour obtenir la vitesse de fonctionnement maximale, l'étape consistant à sélectionner de façon automatique le mode de fonctionnement consistant à faire fonctionner ladite mémoire dans un mode sans page (88) lorsque ladite différence est égale ou supérieure à une valeur de seuil supérieure, et à faire fonctionner ladite mémoire dans un mode à pages (84), lorsque ladite différence est égale ou inférieure à une valeur de seuil inférieure.

2. Procédé selon la revendication 1, dans lequel ladite première partie de l'adresse comprend une partie d'adresse de ligne et selon lequel l'étape de détection d'un besoin de page inclut la comparaison de parties de ladite adresse de ligne lors de transferts successifs à ladite mémoire, un besoin de page étant indiqué lorsque lesdites parties de l'adresse de ligne sont différentes lors de transferts successifs à ladite mémoire.

3. Procédé selon la revendication 2, selon lequel l'étape consistant à évaluer ladite différence inclut une modification d'une valeur de comptage dans un sens (74) en réponse à chaque besoin de page et une modification de ladite valeur de comptage dans un sens opposé (76) en réponse à chaque non besoin de page, ladite valeur de comptage représentant ladite différence.

4. Procédé selon la revendication 1, selon lequel l'étape de sélection automatique du mode de fonctionnement consiste à réaliser une commutation sur un mode sans page (88) lorsque ladite mémoire fonctionne dans un mode à pages et que ladite différence devient égale ou supérieure à la limite de la valeur de seuil supérieure, et à effectuer une commutation sur le mode à pages (84) lorsque ladite mémoire fonctionne dans le mode sans page et que ladite différence devient égale ou inférieure à la valeur de seuil inférieure.

5. Procédé selon la revendication 4, selon lequel l'étape de sélection automatique du mode de fonctionnement consiste à conserver le même mode de fonctionnement (90) lorsque ladite différence se situe entre lesdites valeurs de seuil supérieure et inférieure.

6. Procédé selon la revendication 2, selon lequel l'étape d'évaluation de ladite différence consiste à incrémenter une valeur de comptage en réponse à chaque besoin de page (74) et à décrémenter ladite valeur de comptage en réponse à chaque non besoin de page (76), ladite valeur de comptage représentant ladite différence.

7. Procédé selon la revendication 6, incluant en outre l'étape consistant à maintenir ladite valeur de comptage entre des limites supérieure et inférieure de la valeur de comptage.

8. Dispositif pour commander une mémoire à accès direct (12) possédant des lignes multiplexées (24) de transmission d'adresses servant à recevoir séquentiellement une première partie (A < 21: 12 >) et une seconde partie d'adresse (A < 11:2 >) d'une adresse, ladite mémoire (12) fonctionnant selon un mode sans page ou un mode à pages, qui respectivement utilise ou non la réception de ladite première partie d'adresse dans lesdites lignes multiplexées (24) de transmission d'adresses, ledit dispositif comprenant :
des moyens (22) pour envoyer séquentiellement des adresses pour accéder à ladite mémoire, chaque adresse comprenant une première partie et une seconde partie;
des moyens (54) pour détecter un besoin de page lorsque la première partie de l'adresse change lors de transferts successifs à ladite mémoire, et pour détecter un non besoin de page lorsque la première partie de l'adresse reste identique lors de transferts successifs à ladite mémoire;
caractérisé en ce que ledit dispositif comporte en outre :
des moyens (60) pour déterminer une différence entre le nombre de besoins de pages et le nombre de non besoins de pages pendant le fonctionnement de ladite mémoire; et
des moyens (62) pour sélectionner de façon automatique un mode de fonctionnement de ladite mémoire en réponse à ladite différence pour obtenir la vitesse de fonctionnement maximale, lesdits moyens (62) de sélection automatique du mode de fonctionnement comprenant des moyens pour faire fonctionner ladite mémoire dans un mode sans page lorsque ladite différence est égale ou supérieure à une valeur de seuil supérieure et pour faire fonctionner ladite mémoire dans un mode à pages lorsque ladite différence est égale ou inférieure à une valeur de seuil inférieure.

9. Dispositif selon la revendication 8, dans lequel lesdits moyens pour détecter un besoin de pages comprennent des moyens (56) pour mémoriser la première partie de chaque adresse, et des moyens (54) pour comparer une première partie actuelle de l'adresse à la première partie précédente de l'adresse et pour délivrer un signal de besoin de pages lorsque lesdites premières parties de l'adresse sont différentes lors de transferts successifs à ladite mémoire.

10. Dispositif selon la revendication 8, dans lequel lesdits moyens pour déterminer une différence comprennent un compteur (60) et des moyens (54) pour incrémenter ledit compteur en réponse à chaque besoin de pages et pour décrémenter ledit compteur en réponse à chaque non besoin de page, une valeur de comptage dans ledit compteur représentant la différence.

11. Dispositif selon la revendication 10, comprenant en outre des moyens pour conserver la valeur de comptage dans ledit compteur entre des limites supérieure et inférieure de la valeur de comptage.

12. Dispositif selon la revendication 8, dans lequel lesdits moyens (62) de sélection automatique du mode de fonctionnement comprennent des moyens pour réaliser une commutation sur un mode sans page lorsque ladite mémoire fonctionne dans un mode à pages et que ladite différence devient égale ou supérieure à la valeur de seuil supérieure, et à effectuer une commutation sur le mode à pages lorsque ladite mémoire fonctionne dans le mode sans page et que ladite différence devient égale ou inférieure à la valeur de seuil inférieure.

13. Dispositif selon la revendication 12, dans lequel lesdits moyens (62) de sélection automatique du mode de fonctionnement incluent des moyens pour conserver le même mode de fonctionnement lorsque ladite différence est comprise entre lesdites valeurs de seuil supérieure et inférieure.
